(19) Europäisches Patentamt
European Patent Office
Office européen des brevets

(11) Publication number : **0 628 880 A2**

(12) **EUROPEAN PATENT APPLICATION**

(21) Application number : **94810311.4**

(51) Int. Cl.$^5$ : **G03G 5/05,** G03G 5/06

(22) Date of filing : **27.05.94**

(30) Priority : **05.06.93 GB 9311683**

(43) Date of publication of application : **14.12.94 Bulletin 94/50**

(84) Designated Contracting States : **CH DE FR GB IT LI**

(71) Applicant : **Japat Ltd**
**Klybeckstrasse 141**
**CH-4057 Basel (CH)**

(72) Inventor : **Takahashi, Ryuichi**
**205, 3-12-52, Higashinaniwa-cho**
**Amagasaki-shi, Hyogo (CH)**
Inventor : **Yamamoto, Kazuyo**
**2-4-56-201, Minamiguchi-cho**
**Takarazuka-shi, Hyogo (CH)**
Inventor : **Chassot, Laurent, Dr.**
**CH-1724 Praroman (CH)**
Inventor : **Iqbal, Abul, Dr.**
**La Dey 202**
**CH-1732 Arconciel (CH)**

(74) Representative : **Dannappel, Hans-Jochen**
**c/o CIBA-GEIGY AG**
**Patentabteilung**
**Postfach**
**CH-4002 Basel (CH)**

(54) **Photoreceptor.**

(57) A photoreceptor comprises a charge generating layer and a charge transporting layer, the former containing :

(i) as a charge generating compound at least one selected from the group consisting of pyrrolopyrrol, mono- or dithio-pyrrolopyrrol, azo-pigments, quinacridone, phthalocyanine, indanthrone, flavathrone, pyranthrone, anthraquinon, perylene, dioxazine, perinone, thioindigo, isoindoline, isoindolinon and metal complexes ; and

(ii) 1-100 wt%, relative to the weight of the above charge generating compound, of a nitroxyl or hydroxylamino compound composed of at least an unsubstituted or substituted 5-, 6- or 7-membered heterocycle containing a divalent group of Formula

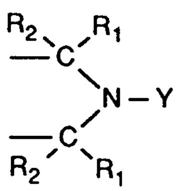 (I) or 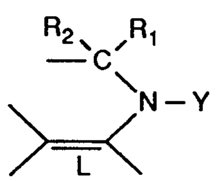 (II),

wherein $R_1$ and $R_2$ independently represent methyl, ethyl or phenyl or altogether form a 4-12 membered aliphatic ring, L represents an aromatic residue, Y means O· or OH, or an acid addition salts thereof, or

(iia) 0.01-100 wt%, relative to the weight of the above charge generating compound, of a condensation or addition polymer the repeating molecular unit of which contains at least a nitroxyl or hydroxylamino group containing residue, or is substituted by a nitroxyl or hydroxylamino group containing side group, as well as a mixture among them or a mixture with nitroxyl- or hydroxylamine-free components.

EP 0 628 880 A2

The present invention relates to a photoreceptor to be used in imaging technology, such as electrophotography, electrostatic imaging and the like, and in particular, to a photoreceptor the stability of which is improved greatly by incorporating a specific stabilizer, and to a process for stabilizing the charge generating organic layer against oxidative degradation by incorporating a specific stabilizer.

In recent years, various electrophotographic photoreceptors using organic compounds as their photoconductors have been developed, most of which comprise a charge generating layer and a charge transporting layer.

It is expected that such electrophotographic photoreceptors using organic photoconductors allow further improvement in electrophotographic sensitivity and the like because of the easiness and flexibility in designing them. Another advantage of photoreceptors using organic photoconductors may be high production yield due to the easiness in forming films composing charge generation and charge transporting layers.

The electrophotographic photoreceptors repeatedly experience various image formation processes in electrophotographic machines, during which they have to exhibit stable performance.

However, prior art electrophotographic photoreceptors using organic photoconductors have a shortcoming that the charging-up characteristics thereof will be degraded during repeated operations, with the result that the obtained image quality deteriorates gradually.

It is assumed that the influences of corona charging-up are main causes for the degradation of the above photoreceptors because they are continuously exposed to corona discharging environment when they are used in electrophotographic machines. It is assumed that the organic photocondutors are damaged by attack of active species such as ozone or the like generated by corona discharging, and the degradation may be accelerated as the times of operation increases. In electrophotographic photoreceptors using organic photoconductors, negative charging-up is used conventionally. But, negative charging-up usually generates more ozone than positive charging-up, which is regarded as a main cause for the tendency that organic photoreceptors using negative charging-up are more sensitive to degradation than other photoreceptors using positive charging up.

As methods for preventing the aforementioned degradation of electrophotographic photoreceptors, there have been proposed such methods as those described in Japanese Patent Application Laid Open Nos. Sho 57-122444, Sho 58-120260, Sho 61-156131 and Sho 62-105151. However, these methods do not satisfactorily avoid the degradation of electrophotographic photoreceptors. For example, they can not satisfactorily prevent the lowering of surface potential (Vd). Another disadvantage of these methods is that the added additives act as trapping agents for the charge carriers to be transported, resulting in increased residual potential. Apart from the above described methods, there have been proposed to employ hindered amine compounds containing no nitroxyl group (see, for example, GB-A-2 201 254) or hindered phenol compounds (see, for example, Japanese Patent Application Laid Open No. Hei 2-144544) as additives for the prevention of degradation of organic electrophotographic photoreceptors. These compounds however, are only effective for azo-based charge generating compounds or phthalocyanine-based charge generating compounds, so that they are not effective for other charge generating compounds.

Accordingly, it is an object of the present invention to solve the aforementioned problem and to provide a photoreceptor to be used in imaging technology, such as electrophotography, electrostatic imaging and the like, the stability of which is improved greatly by incorporating a specific stabilizer in the charge generating layer thereof, the specific stabilizer being effective for various kinds of charge generating compounds, thereby permitting a variety of choice of charge generating compounds for the charge generating layer of said photoreceptor.

The present invention has been achieved by the surprising observation that nitroxyl or N-hydroxy derivatives of hindered amine compounds are unexpectedly effective for avoiding degradation of photoreceptors using organic compounds, and that said nitroxyl or N-hydroxy derivatives of hindered amine compounds are applicable to a large variety of charge generating compounds. Herein, it should be noted that nitroxyl or N-hydroxy derivatives of hindered amine compounds have never been reported as stabilizers for organic photoreceptors.

The present invention is characterized by a photoreceptor comprising a charge generating layer and a charge transporting layer, the former containing:

(i) as a charge generating compound at least one selected from the group consisting of pyrrolopyrrol, mono- or dithio-pyrrolopyrrol, azo-pigments, quinacridone, phthalocyanine, indanthrone, flavanthrone, pyranthrone, anthraquinon, perylene, dioxazine, perinone, thioindigo, isoindoline, isoindolinon and metal complexes; and

(ii) 1-100 wt%, relative to the weight of the above charge generating compound (i) of a compound composed of at least an unsubstituted or substituted 5-, 6- or 7-membered heterocycle containing a divalent group of formula I or II,

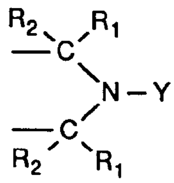 (I) or 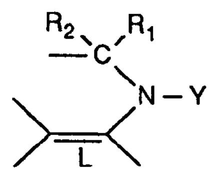 (II),

wherein $R_1$ and $R_2$ independently represent methyl, ethyl or phenyl or altogether form a 4-12 membered aliphatic ring, L represents an aromatic residue, Y means O· or OH, or an acid addition salts thereof, or (iia) 0.01-100 wt%, relative to the weight of the above charge generating compound (i) of a condensation or addition polymer the repeating molecular unit of which contains at least a nitroxyl or hydroxylamino group containing residue, or is substituted by a nitroxyl or hydroxylamino group containing side group, as well as a mixture among them or a mixture with nitroxyl- or hydroxylamine-free components.

Y means preferably O·.

Particularly suitable pigments are those of isoindolin-, isoindolinon-, metal complexes- and especially the pyrrolopyrrol, bisazo-, quinacridon-, phthalocyanin-, anthraquinon- and perylene-series. These pigments are generally known and in part commercially available products.

The nitroxyl and N-hydroxy compounds in the above (ii) and (iia) are similarly known compounds. They are disclosed, for example, in the following publications:

- Chemical Reviews, 1978, Vol. 78, No. 1, 37-64 (J.F.W. Keana, Newer Aspects of the Synthesis and Chemistry of Nitroxide Spin Labels), especially pp. 40-47;
- Imidazolin Nitroxides, 1988, Vol 1, 5-23 (L.B. Volodarsky, I.A. Grigorev, Synthesis of Heterocyclic Nitroxides);
- Tetrahedron Letters, Vol. 29, No. 37, 4677-4680 (R.W. Murray, M. Singh, A Convenient High Yield Synthesis of Nitroxides);
- J. Org. Chem., 1991, Vol. 56, 6110-6114 (Z. Ma, J.M. Bobbitt, Organic Oxammonium Salts), especially the example on page 6114);
- Journal of Polymer Science (Polymer Chemistry Eddition), 1974, Vol. 12, 1407-1420 (T. Kurosaki et al., Polymers Having Stable Radicals), especially the example on pp. 1417-1419;
- US-Patent 3 536 722, Formula I and especially the example 1-6;
- US-Patent 3 971 757, Formula I and example 12;
- US-Patent 3 966 711, Formula I and example 7;
- US-Patent 4 131 599, lines 1 and 2 and example 5;
- US-Patent 5 001 233, especially example 1.

In any case newly applicable nitroxyl compounds defined in (ii) and (iia) can be prepared in analogy with generally known methods.

The nitroxyl compound of (ii) and (iia) is used preferably at an amount of 5-100 wt% relative to the amount of the pigment (i).

$R_1$ and $R_2$ are preferably methyl.

It is also possible to apply inorganic or organic salts of nitroxyl and N-hydroxy compounds of (ii) generated by adding acids maximal at an amount equivalent to the amount of the nitroxyl groups. Such acids can be inorganic salts such as sulfric, hydrochloric, phosphoric, or organic carboxylic acids such as formic, acetic, oxalic, maleinic, benzoic or salicyclic acid, organic sulfonic acid such as methane or p-toluenesulfonic acid or organic phosphor containing acids such as diphenylphosphoric acid, methanephosphoric acid or diphenyl phophinic acid.

Of particular interest are photoreceptors in which a nitroxyl compound of (ii) of formula

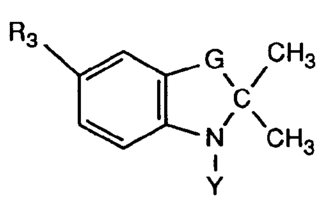 (III),

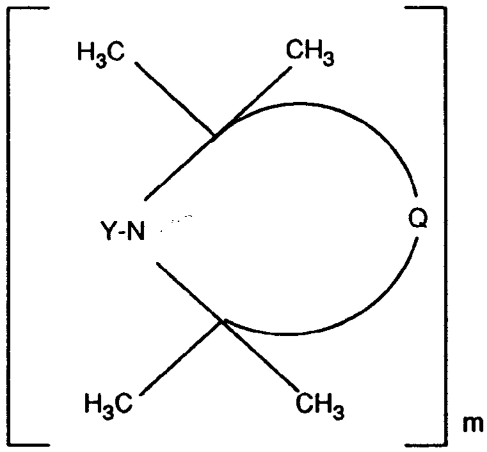

(IV),

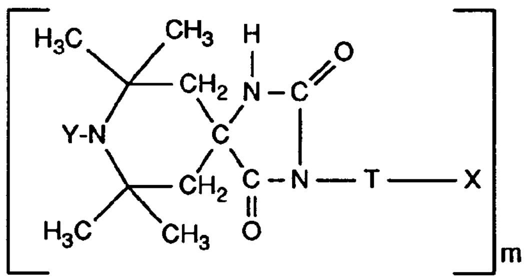

(V),

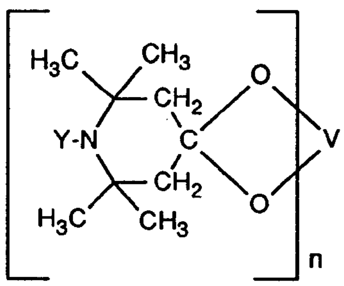

(VI)

or

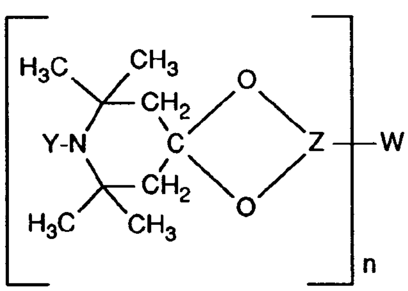

(VII)

are applied, wherein $R_3$ is $C_1$-$C_{18}$alkoxy, G means a divalent group of formula $-CR_4-CH-$ or $-CHR_4-CH_2-$ and $R_4$ is $C_1$-$C_{18}$alkyl, Q represents a group of formula

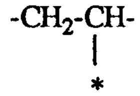 , 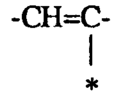 , 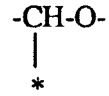 , 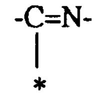 , 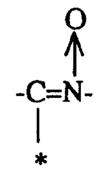 , 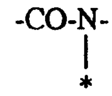 , 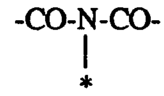 ,

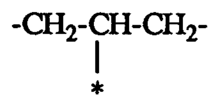 , 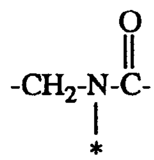 , 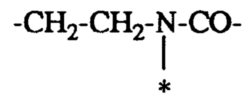 , 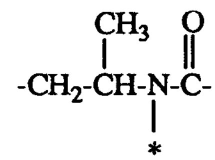

or

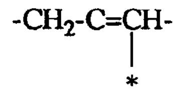 ,

wherein the bond indicated by * means a bond which leads to T, T is a direct bond or a group of formula

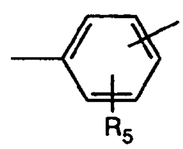 ,

wherein $R_5$ means hydrogen, halogen or $C_1$-$C_4$alkyl, or $-(CH_2)r-$, wherein r is 1 or 2,
m is a number of 1, 2, 3, or 6,
X is, if m=1, hydrogen, $C_1$-$C_{18}$alkyl, unsubstituted or substituted phenyl which is substituted by $C_1$-$C_4$alkoxy, phenyl or halogen or, under the condition that T means no direct bond if it is bound to an N-atom, a group of Formula $-OCO-NR_6R_7$, $-OSO_2-NR_6R_7$, $-OCO-R_7$, $-COOR_7$, $-CONR_6R_7$, $-NR_6-COR_7$, $-NR_6-CONR_6R_7$, $-OR_7$ or $NR_6R_7$, wherein $R_6$ means hydrogen or $C_1$-$C_{18}$alkyl, $R_7$ is $C_1$-$C_{18}$alkyl, $C_2$-$C_{12}$alkenyl, $C_5$-$C_{12}$cycloalkyl, unsubstituted or substituted phenyl or naphthyl which is substituted by $C_1$-$C_4$alkyl, $C_1$-$C_4$alkoxy, halogen, phenyl or nitro, or a group $-(CH_2)_s-CHR_6R_9$, s means zero, 1, 2 or 3, $R_8$ means hydrogen, methyl or phenyl and $R_2$ means -OH, halogen, a group $-COOCH_3$ or $-COOC_2H_5$,
X is, if m=2, a group of Formula $-(CH_2)p-$ or, under the condition that T means no direct bond if it is bound to an N-atom, a group of Formula $-O-(CH_2)p-O-$, $-NR_6-(CH_2)p-NR_6-$, -OCO-F-COO-, $-NR_6-CO-F-CO-NR_6-$, -OCO-NH-F-NH-COO- or $-NR_6-CONH-F-NHCO-$, $NR_6-$, wherein F represents $-(CH_2)p-$,

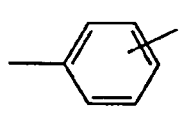

or

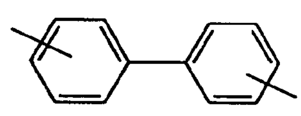

and p means a number between 2 and 10,
X is, if m=3, a group

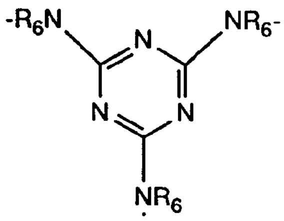
,
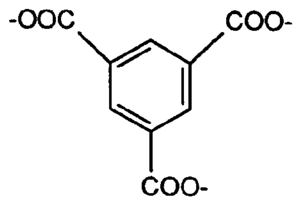
or
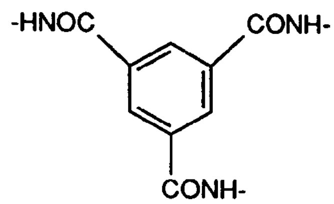

X is, if m=4, a group

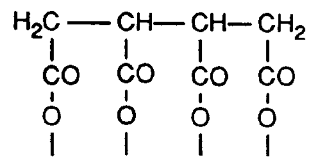

or
X is, if m=6, a group

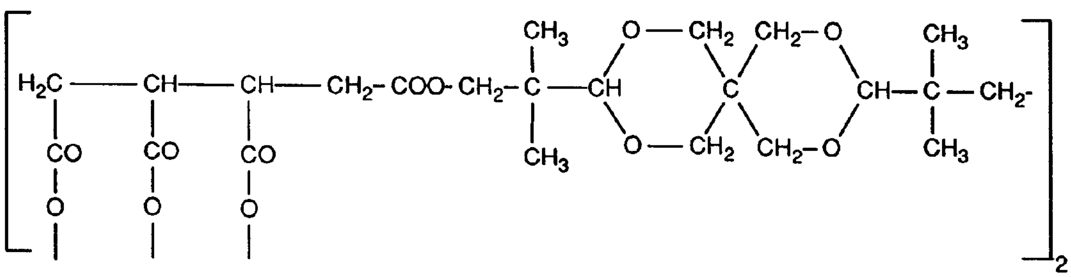

n is a number of 1 or 2,
V means, if n=1, $C_2$-$C_8$ alkylen or hydroalkylen or $C_4$-$C_{22}$ acyloxyalkylen, and if n=2, the group $(-CH_2)_2C(CH_2-)_2$ or $>C<$, and
Z is a group of formula

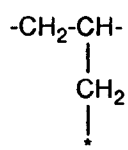
or
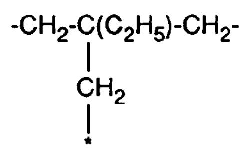
,

wherein the bond indicated by * represents the bond which leads to W,
W means, if n=1, a group $-OCOR_{10}$, wherein $R_{10}$ is $C_1$-$C_{18}$ alkyl, unsubstituted or substituted phenyl or naphthyl which is substituted by $C_1$-$C_4$ alkyl, $C_1$-$C_4$ alkoxy or halogen, if n=2, a group of formula $-OCO-(CH_2)p-COO-$ or

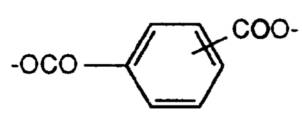
,

and
Y means O· or OH.

When the substituents are $C_1$-$C_4$ alkyl, then, they are, for example, methyl, ethyl, n-propyl, isopropyl, n-butyl, sec-butyl or tert-butyl. When the substituents are $C_1$-$C_{18}$ alkyl, then examples for alkyl with more than 4 carbon atoms are pentyl, hexyl, heptyl, n-octyl, 2-ethylhexyl, decyl, dodecyl, tetradecyl, hexadecyl or octa-

decyl in addition.

$C_1$-$C_4$ alkoxy means, for example, methoxy, ethoxy, n-propoxy, isopropoxy or butyloxy. Within $C_1$-$C_{18}$ alkoxy higher alkoxy includes, for example, hexyloxy, decyloxy, dodecyloxy, hexadecyloxy or octadecyloxy in addition.

Halogen means, for example, iodine, fluorine, preferably bromine, and more preferably chlorine.

When the substituents are $C_2$-$C_{12}$ alkenyl, then they are, for example, vinyl, allyl, methallyl, 2-butenyl, 2-hexenyl, 3-hexenyl, 2-octenyl or 2-dodecenyl.

If $R_7$ represents $C_5$-$C_{12}$ cycloalkyl, then it is, for example, cyclopentyl, cycloheptyl, cyclooctyl, cyclononyl, cyclododecyl and preferably cyclohexyl.

V means, as $C_2$-$C_8$ alkylen or hydroxyalkylen, for example, 1-methyl-ethylen, propylen, 2-ethyl-propylen or 2-ethyl-2-hydroxymethylpropylen and, as $C_4$-$C_{22}$ acyloxyalkylen, for example, 2-ethyl-2-acetoxymethylpropylen.

Of particular interest are the electrophotographic photoreceptors in which a nitroxyl or N-hydroxy derivative of (ii) of formulae IV, V or VI, the compound having the above meaning, is incorporated as a stabilizer.

Particularly suitable nitroxyl compounds of (ii) are those with formulae

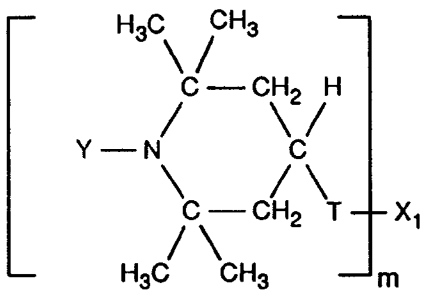

(VIII),

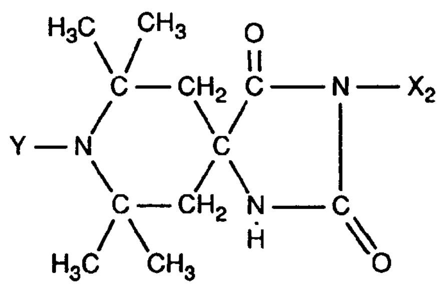

(IX)

or

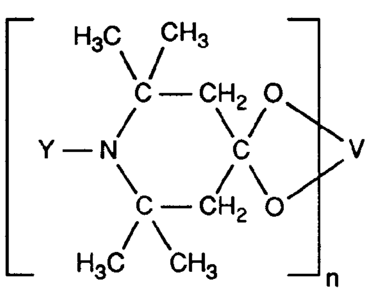

(X),

wherein

T means a direct bond,

m is 1, 2 or 3,

$X_1$ is, if m=1, $C_1$-$C_{18}$ alkyl or -OCO-$R_7$, -$NR_6$-$COR_7$, wherein $R_6$ is hydrogen or $C_1$-$C_{18}$ alkyl and $R_7$ is $C_1$-$C_{18}$ alkyl or unsubstitued or substituted phenyl or naphthyl which is substituted by $C_1$-$C_4$ alkyl, $C_1$-$C_4$ alkoxy, phenyl or halogen,

$X_1$ is, if m=2, a group $-OCO-(CH_2)_p-COO-$ or $-NR_6CO-(CH_2)_p-CONR_{15}-$, wherein p is a number between 2 and 8,

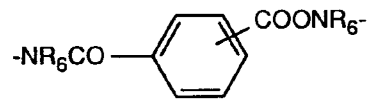
or
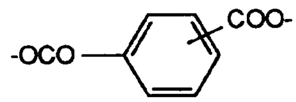

$X_1$ is, if m=3, a group

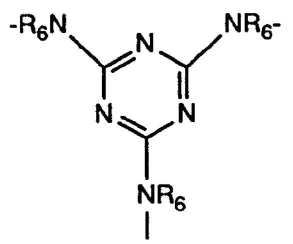
or
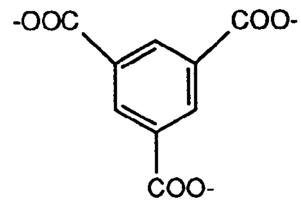

$X_2$ is $C_1$-$C_{18}$ alkyl,
n is the number 2, and
V is the group $(-CH_2)_2C(CH_2-)_2$ or >C< and
Y is O·.

Nitroxyl compounds of (ii) of formula VIII or IX, wherein T means a direct bond, m is 1 and $X_1$ means benzoyloxy or naphthoyloxy and $X_2$ is $C_2$-$C_8$ alkyl, are preferred.

The polymeric nitroxyl and N-hydroxy derivatives in the aforementioned (iia) are similarly known compounds. They are disclosed, for example, in the following publications:
F.E. Karrer, Makromol. Chem. (1980), 595-633;
T. Osa et al., Chem. Letters (1988), 1423-1426;
T. Kurosaki et al., J. Polymer Science 10 (1972), 3295-3310;
R. Seidemann et al., Makromol. Chem. 190, (1989), 3117-3125.

The polymeric nitroxyl derivatives are preferred. In any case, newly applicable polymeric nitroxyl and N-hydroxy derivatives defined in the aforementioned (iia) can be prepared in analogy with generally known methods, and if necessary, they can be produced from known HALS (hinderd amine light stabilizer) as described, for example, in EP-A 1835, US-Patent 4 210 612, DE-OS 32 29 640, EP-A 47 967, US-Patent 4 547 548, US-Patent 4 477 615, and US-Patent 4 413 075.

The nitroxyl and N-hydroxy derivative of (iia) is used preferably at an amount of 0.1-100, and more preferably, at an amount of 0.5 to 15 wt% relative to the weight of the pigment.

It is also possible to apply inorganic or organic salts of nitroxyl or N-hydroxy compounds of (iia) which are generated by adding acids maximal at an amount equivalent to that of the nitroxyl groups. Such acids can be inorganic acids like sulfric-, hydrochloric- or phosphoric acid, or organic carboxylic acids like formic-, atetic-, oxalic-, maleinic-, benzoic- or salicylic acid, organic sulfornic acid like methane- or p-toluenesulfonic acid or organic phosphor containing acids like diphenylphosphoric acid, methanephosphoric acid or diphenylphosphonic acid.

Particularly suitable polymeric nitroxyl and N-hydroxy compounds of (iia) are condensation or addition polymers the repeating molecular unit of which contains at least a residue of formula

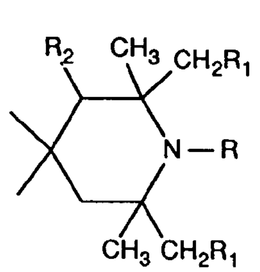
(Ia)

or is at least once directly or indirectly substituted by one of the side groups of formulae

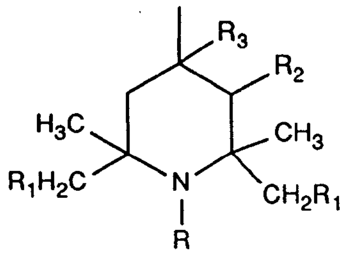, 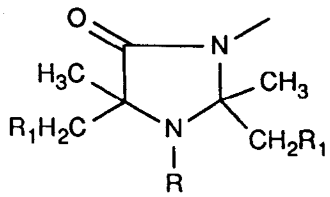, 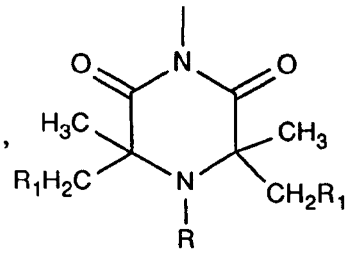,

(IIa) (IIIa) (IVa)

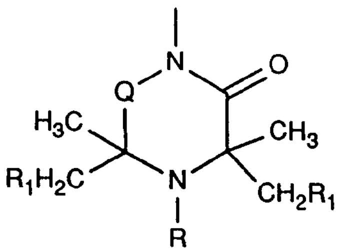, 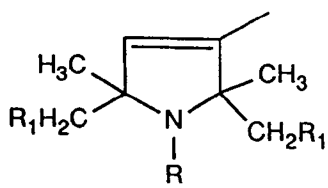 or 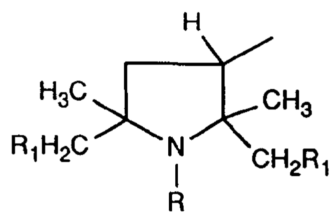,

(Va) (VIa) (VIIa)

wherein R means 0· or OH, $R_1$ means hydrogen or $C_1$-$C_4$ alkyl, $R_2$ means hydrogen or $C_1$-$C_4$ alkyl, $R_3$ means hydrogen or a free valence and Q means $-CH_2-$, $-(CH_2)_2-$ or $-CH_2-CH(CH_3)-$, as well as mixed polymers among them or with nitroxyl- and hydroxylamin-free components. R is preferably 0·.

Under condensation and addition polymers should be understood those polymers which can be produced by polycondensation or polyaddition reaction. Examples therefor are polyester, polyether, polyolefine, polyamide, polyimide, polyurethane, polyurea, polyphosphate, polyphosphonate, polycarbonate, polyacetale, phenolformaldehyde resin or polyphosphazene and mixed polymers thereof. Polyester, polyether, polyolefine, polyimide and polyphosphate are preferred. The average molecular weight Mw of these polymers lies suitably between 2000 and 100000, preferably between 5000 and 20000. Mw is determined according to the generally known method of gel permeation chromatography (GPC).

Under the above defined condensation and addition polymers are those of particular interest the repeating molecular unit of which contains at least a residue of formulae

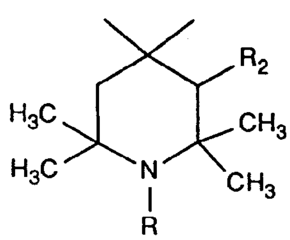

(VIIIa)

or is at least once directly or indirectly substituted by a side group of formula

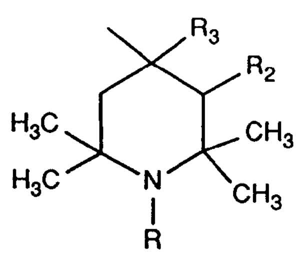

(IXa),

wherein R, $R_2$ and $R_3$ have the above mentioned meaning.

Preferred polymers of (iia) are those the repeating molecular unit of which contains at least a bivalent residue of formulae

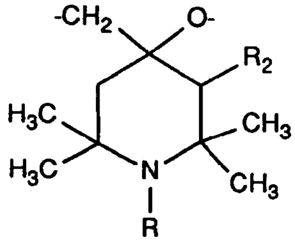 (Xa) or 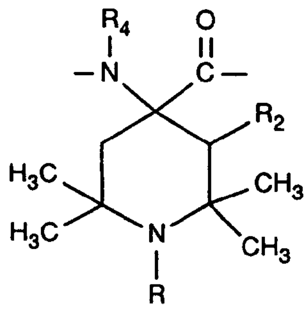 (XIa),

or is at least once substituted by a monovalent side group of formula

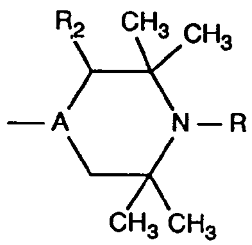 (XIIa),

wherein A is a group of formulae

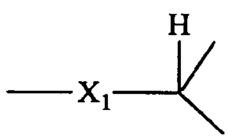 (XIIIa), 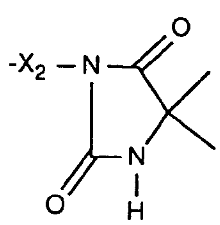 (XIVa)

or

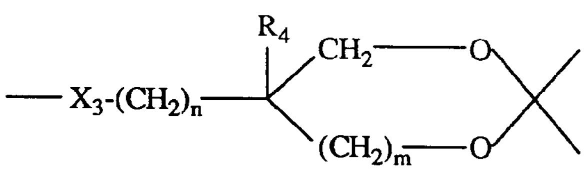 (XVa),

R and $R_2$ have the above mentioned meaning, $R_4$ means hydrogen, methyl or ethyl, m is zero or 1, n means, if m is zero, then 1 and, if m is 1, then zero,

$X_1$ means a direct bond, -O- or a group of formulae

-CO-O-, -CO-$NR_5$-,

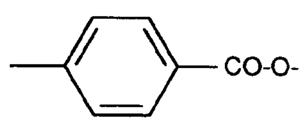

-$CH_2$-O-, -$NR_5$-, -O-$CH_2CH_2$-NH-, -NH-$CH_2CH_2$-O-,

$-CO-NR_5-(CH_2)_p-CO-NH-$, $-NH-(CH_2)_p-$

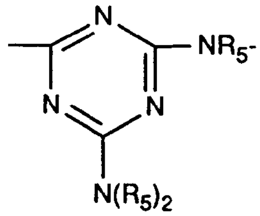
,

$-(CH_2)_p-CO-O-$,

wherein $R_5$ means hydrogen $C_1$-$C_{12}$alkyl, $C_5$-$C_7$cycloalkyl or $C_7$-$C_{11}$ aralkyl and p means a number between 1 and 6, $X_2$ is a direct bond or a group of formulae $-(CH_2)_p-$, $-CO-O-CHR_5-CH_2-$ or $-CO-NR_4-CHR_5-CH_2-$, wherein $R_4$, $R_5$ and p have the above mentioned meaning, and $X_3$ means a direct bond, -O-, or a group of Formula -CO-O-, $-O-CH_2-O-$ or $-(CH_2)_p-$, wherein p has the above mentioned meaning.

The following polymers are particularly preferred:

a) Polymers of the same type as disclosed in EP-A-0 001 835 (claim 1) with a repeating unit of formula

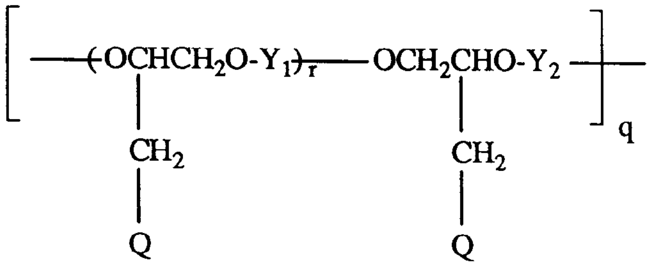
(XVIa),

wherein Q is a residue of Formula XIIa, in which A means a group

-O-CH<,

$-NR_5-CH<$,

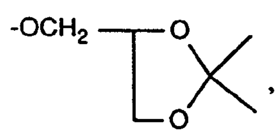
,
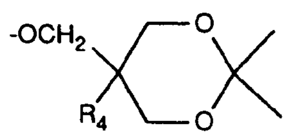
or
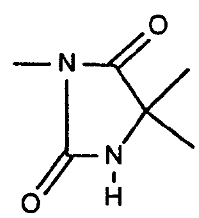
,

R, $R_2$, $R_4$ and $R_5$ have the above mentioned meaning, q is a number between 10 and 50 and r is zero or 1, and if r is zero,

$Y_2$ is an aliphatic, aromatic, araliphatic or alicyclic diacyl group with up to 20 carbon atoms,

if r is 1 and Q means a residue of Formula XIIa, wherein A is

-O-CH<,

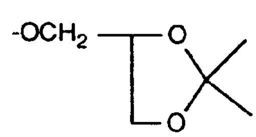
or
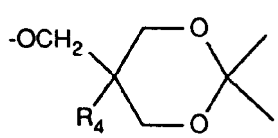
,

$Y_1$ means a saturated, aliphatic diacyl group with up to 20 carbon atoms, a benzenedicarbonyl group, a cyclohexanedicarbonyl group, a group

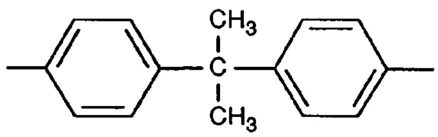 or 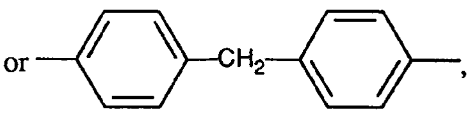,

and

if r is 1 and Q means a residue of Formula XIIa, wherein A is

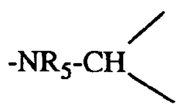 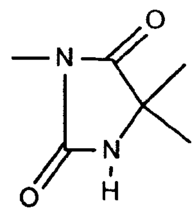,

$Y_1$ means a saturated aliphatic diacyl group with up to 20 carbon atoms, a benzenedicarbonyl group, a cyclohexanedicarbonyl group, a group

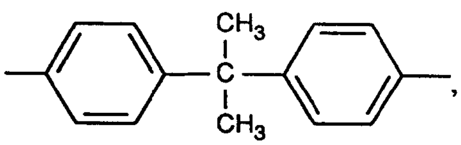, 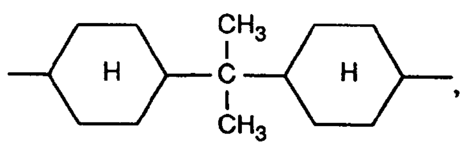,

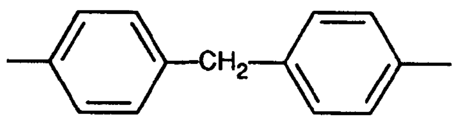 or 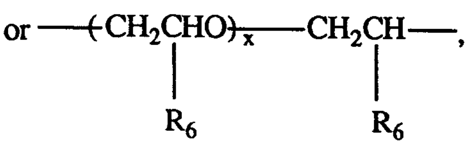,

wherein x is zero or a number of from 1 to 8 and $R_6$ means hydrogen or methyl, and

$Y_2$ means, if r is 1, a saturated aliphatic diacyl group with up to 20 carbon atoms, a benzenedicarbonyl group, a cyclohexanedicarbonyl group, an alkenyl group with from 2 to 10 carbon atoms, a xylylene group, a group

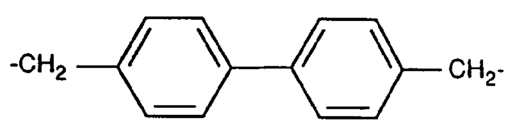

or $-CONH-Y_3-NHCO-$,

wherein $Y_3$ is an alkylene group group with 2 to 20 carbon atoms or an unsubstituted or methyl-substituted phenylene group.

b) Polymers as disclosed in US-Patent 4 210 612 with a repeating unit of formula

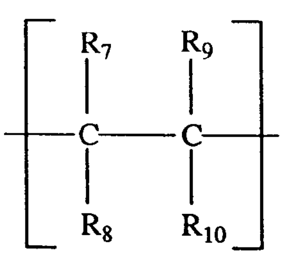

(XVIIa),

wherein $R_7$ is a group of formulae

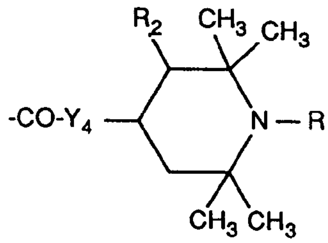
or
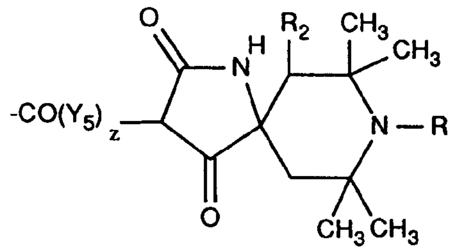
,

wherein R and $R_2$ have the above mentioned meaning, $Y_4$ is -O- or $-NR_5-$, wherein $R_5$ has the above mentioned meaning, $Y_5$ means a group $-O-CHR_{11}-CH_2-$,
wherein $R_{11}$ is hydrogen, methyl, ethyl, phenoxymethyl or phenyl and z means zero or 1, $R_5$, $R_9$ and $R_{10}$ are independently hydrogen or $C_1$-$C_4$ alkyl, $R_9$ can also be - COOH, and if $R_8$ and $R_9$ are hydrogen, $R_7$ and $R_9$ altogether form a group of Formula

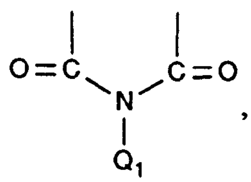

wherein $Q_1$ is a group

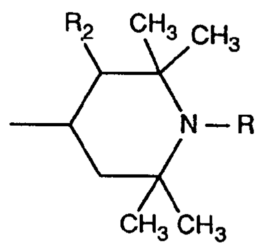

in which R and $R_2$ have the above mentioned meaning, as well as copolymers of XVIIa with a compound containing at least a polymerizable double bond, wherein at least a repeating unit XVIIa is contained per 10 co-components.

c) Copolymers as disclosed in DE-OS 32 29 640 (pp. 2-5) from

1) at least an unsaturated derivative of formula

$$R_{12}-Y_6-CO-CH=CH-CO-Y_7-R_{13} \quad (XVIIIa)$$

and

2) at least a comonomer of formula

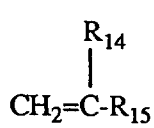
(XIXa),

wherein $R_{12}$ is a group of Formula XIIa with the above mentioned meaning and $R_{13}$ is hydrogen, $C_1$-$C_{12}$alkyl, which can be disrupted by -O-, $C_3$-$C_5$ alkenyl, $C_7$-$C_{11}$ aralkyl, $C_5$-$C_7$ cycloalkyl or equal to $R_{12}$, $Y_6$ and $Y_7$ independently mean -O- or $-NR_5-$, wherein $R_5$ has the above mentioned meaning,
$R_{14}$ is hydrogen or methyl,
$R_{15}$ means hydrogen $C_1$-$C_{12}$alkyl, phenyl, Cl, CN, $C_1$-$C_4$ alkoxy, $C_2$-$C_5$ alkanoyloxy, $-CONH_2$, $-COOR_{16}$, $-OR_{16}$ or - $CONR_{17}R_{18}$,
$R_{16}$ is hydrogen $C_1$-$C_{12}$alkyl, $C_2$-$C_4$ hydroxyalkyl or a group of Formula XII with the above mentioned

meaning, $R_{17}$ is $C_1$-$C_{12}$alkyl, $C_5$-$C_7$ cycloalkyl, phenyl or a group of formula

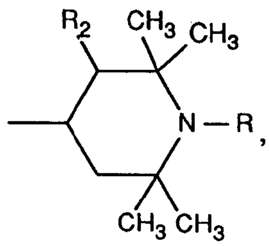

wherein R and $R_2$ have the above mentioned meaning, $R_{18}$ is hydrogen $C_1$-$C_{12}$alkyl, $C_5$-$C_7$ cycloalkyl or $C_7$-$C_{11}$ aralkyl or $R_{17}$ and $R_{18}$ together with the N-atom, to which they are bound, form a 5-7 membered heterocyclic ring selected from pyrrolidin, piperidin, morpholin or 4-alkylpiperazin,

or copolymers from

1) at least a maleimid of formula

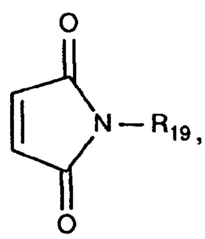

wherein $R_{19}$ is a group $Q_1$, and

2) at least a comonomer of formula

$$CH_2=CH-R_{20},$$

wherein $R_{20}$ hydrogen or $C_1$-$C_{12}$ alkyl.

d) Homopolymers with a repeating unit of formula

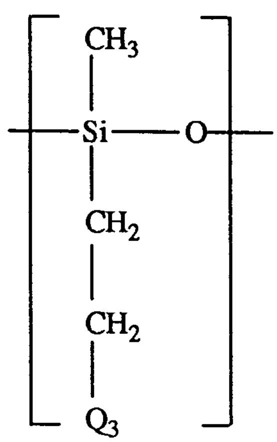

(XXa),

wherein $Q_3$ is a group of formulae

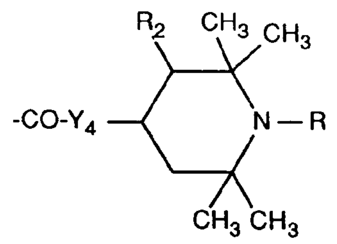 , 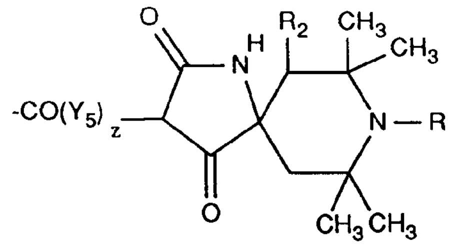 ,

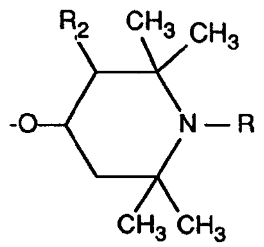 ,

wherein R and $R_2$ have the above mentioned meaning, $Y_4$ is -O- or $-NR_5-$, wherein $R_5$ has the above mentioned meaning, $Y_5$ means a group $-O-CHR_{11}-CH_2-$,

wherein $R_{11}$ hydrogen, methyl, ethyl, phenoxymethyl or phenyl and z means zero or 1, as well as compolymers of XX with a compound containing at least a polymerizable double bond, wherein at least a repeating unit XX is contained per 10 co-components.

e) Polymers of the same type as disclosed in EP-A-0 047 967, that is, polymers obtained by condensation of a compound of formula

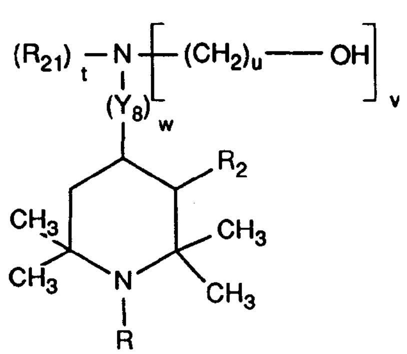

(XXIa),

wherein R and $R_2$ have the above mentioned meaning, $R_{21}$ is hydrogen, $Y_8$ means a group $-(CH_2)_u-NH-$, u is a number of 1-4, t is zero or 1, w is zero or 1 and v is 1 or 2, with the condition that if v is 2, then t means zero, with a diisocyanate of Formula

$$O=C=N-Y_9-N=C=O \quad (XXIIa),$$

wherein $Y_9$ means a group

$-(CH_2)_a-$,

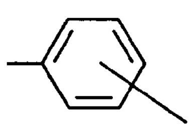 , 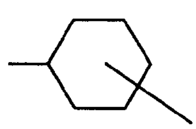 , 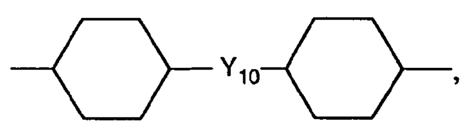 ,

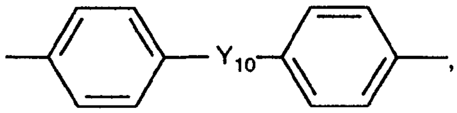

wherein $Y_{10}$ means a direct bond, $-(CH_2)_b-$, $-NR_{22}-$, -O-, -S-, $-SO_2-$, a means a number of from 1 to 10 and b means a number of from 1 to 5 and $R_{22}$ is $C_1$-$C_4$ alkyl.

f) Polymers as disclosed in US-Patent 4 547 548 of formula

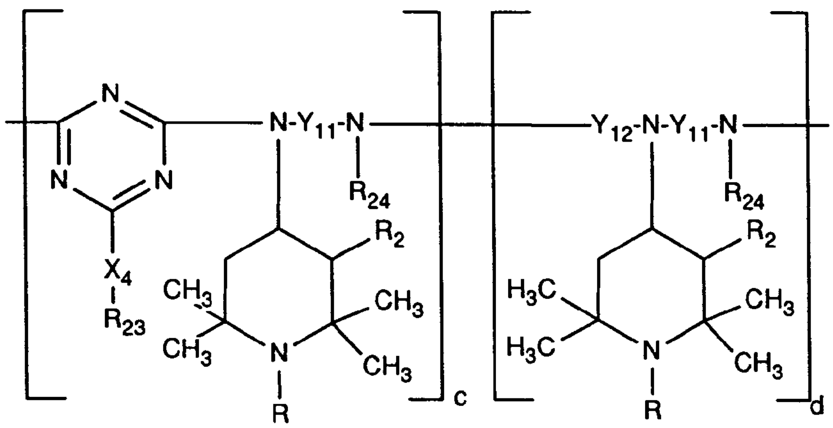

(XXIIIa),

wherein R has the above mentioned meaning, $R_{23}$ is hydrogen, $C_1$-$C_{12}$ alkyl, substituted $C_2$-$C_{12}$ alkyl which is substituted by -OH, $C_1$-$C_4$ alkyl or $C_2$-$C_8$ dialkylamino, $C_3$-$C_5$ alkenyl, $C_5$-$C_7$ cycloalkyl, $C_6$-$C_{18}$ aryl, $C_7$-$C_{11}$ aralkyl or a group

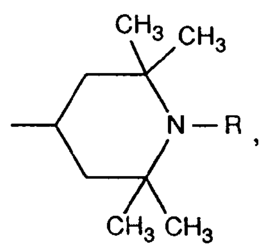

$R_{24}$ means $C_5$-$C_7$ cycloalkyl, $C_6$-$C_{18}$ aryl, $C_7$-$C_{11}$ aralkyl or a group formula

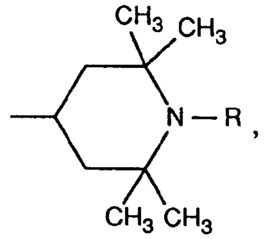

$X_4$ is -O-, -S- or $-NR_{25}-$, wherein $R_{25}$ can have the same meaning as $R_{23}$, $R_{23}X_4$- can mean, regarded as an individual substituent, a heterocyclic residue selected from the group consisting of pyrrolidin-1-yl, piperidin-1-yl, hexahydroazepin-1-yl, morpholin-4-yl or methylpiperazin-1-yl, $Y_{11}$ means $C_2$-$C_{10}$ alkylen, $C_4$-$C_{10}$ alkylen which is disrupted by 1 or 2 oxygen or -NH- group, cyclohexan, phenylene, a group

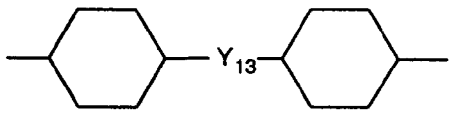 or 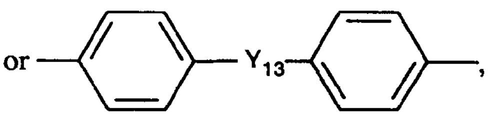,

wherein $Y_{13}$ is a direct bond or $-(-CH_2-)_{1-10}-$, $Y_{12}$ represents $C_2$-$C_{10}$ hydroxyalkylen, $C_4$-$C_8$ alkenylen or a group -CO-, $-OCC-Y_{11}-COO$, $-COO-Y_{11}-OOC$, $-OCNH-Y_{11}-NHCO-$, $-HNOC-Y_{11}-CONH-$ or $-OC-Y_{11}-CO-$, wherein the ratio c:d lies between 4:1 to 1:4.

g) Polymers of the same type as disclosed in US-Patent 4 477 615 with a repeating unit of formula

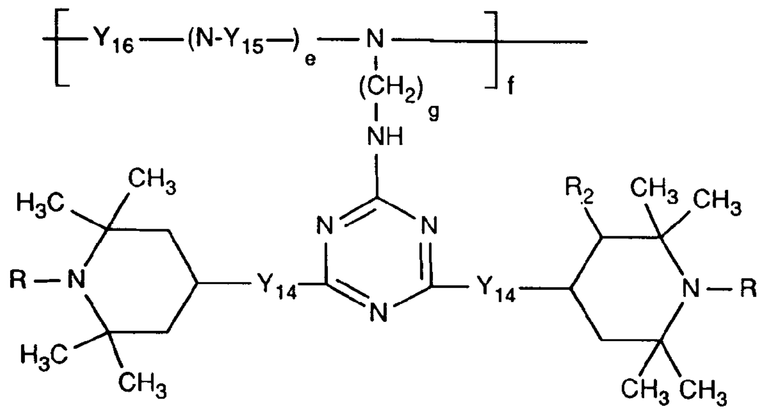 (XXIVa),

wherein R and $R_2$ have the above mentioned meaning, $Y_{14}$ is -O- or $-NR_{18}-$, wherein $R_{18}$ is $C_1$-$C_{12}$ alkyl, $C_5$-$C_7$ cycloalkyl or $C_7$-$C_{11}$ aralkyl, g can be a number of from 2 to 12, $Y_{15}$ is a group $-(-CH_2-)g-$, in which the g has the above mentioned meaning, the group

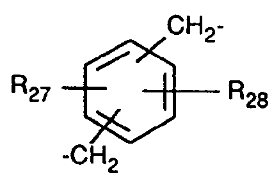 ,

in which $R_{27}$ and $R_{28}$ are independently hydrogen or methyl, or a group

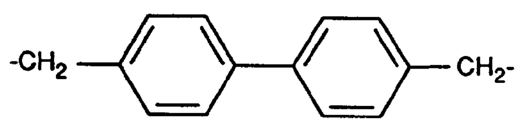 , 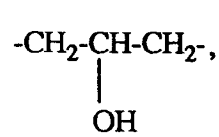

$-CH_2-CH_2(OCH_2-CH_2)_h-$,
wherein h can be 1 to 3
$R_{26}$ is hydrogen, $C_1$-$C_{12}$ alkyl, a group of formula

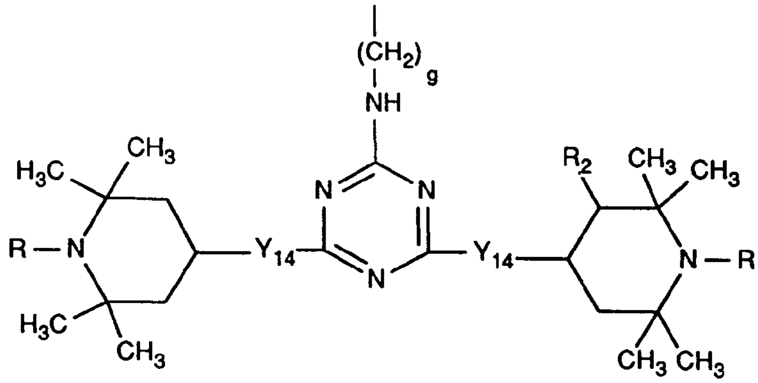

,

wherein R, $R_2$, $Y_{14}$ and g have the above mentioned meaning, or a group of formula

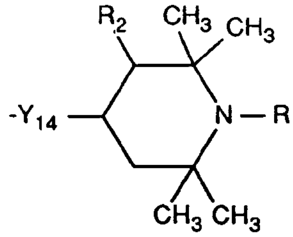

with the above mentioned meaning,
e is zero or 1,
$Y_{16}$ means, if e is zero, the meaning of $Y_{15}$ or a group

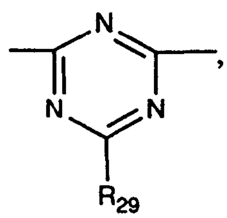

,

$-OC-Y_{17}-CO-$, $-OCHN-Y_{18}-NHCO-$,
$-COO-Y_{19}-OOC$ or $-CH_2-Y_{20}-CO-$,
wherein $R_{29}$ means hydrogen, $C_1$-$C_{12}$ alkyl, $C_5$-$C_7$ cycloalkyl, $C_3$-$C_5$ alkenyl, $C_7$-$C_{11}$ aralkyl, unsubstituted or substituted phenyl which is substituted by $C_1$-$C_4$ alkyl or a group

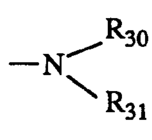

,

$-O-R_{30}$, $-S-R_{30}$, wherein $R_{30}$ and $R_{31}$ are independently hydrogen, $C_1$-$C_{12}$ alkyl, $C_5$-$C_7$ cycloalkyl, $C_7$-$C_{11}$ aralkyl, unsubstituted or $C_1$-$C_4$ alkyl substituted phenyl or $R_{30}$ and $R_{31}$ altogether form piperidin or morpholin with the N-atom to which they are bound, or $R_{29}$ is a group

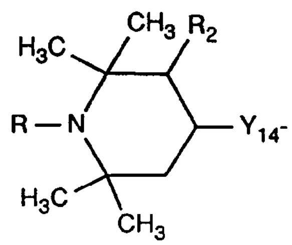

with the above mentioned meaning, $Y_{17}$ is $-(-CH_2-)_i-$ or

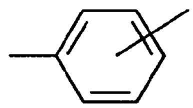,

wherein i is a number of 1 to 8,
$Y_{18}$ is $-(-CH_2-)_k-$,

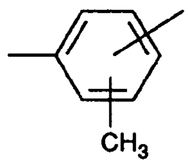 or 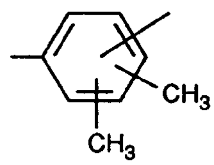,

$Y_{19}$ is $-(-CH_2-)_k-$, wherein k is a number of 2 to 8,
$Y_{20}$ is $-(-CH_2-)_1-$ or

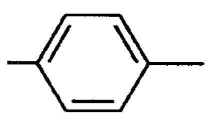,

wherein 1 is 1 or 2, and f can be a number between 2 and 2000.

h) Polymers of the same type as disclosed in US-Patent 4 413 075 with a repeating unit of formula

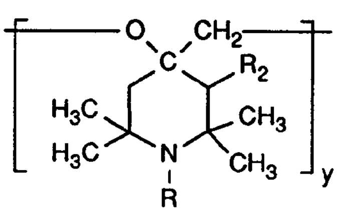 (XXVa),

wherein R and $R_2$ have the above mentioned meaning and Y can vary between 10 and 100.

If substituents mean alkyl, then they can be a branched or unbranched alkylgroup, Examples therefor are - within the frame of the definded carbon number - methyl, ethyl, isopropyl, butyl, sec-butyl, tert-butyl, isoamyl, n-hexyl, 2-ethylbutyl, n-octyl, 2-ethylhexyl, n-decyl or n-dodecyl.

$C_3$-$C_5$ alkenyl means, for example, allyl, methallyl or dimethylallyl.

Under $C_7$-$C_{11}$ aralkyl should be understood, for example, benzyl, phenylethyl, phenylpropyl or naphthylmethyl. Benzyl is preferred.

$C_5$-$C_7$ cycloalkyl is, for example, cyclopentyl, cycloheptyl and expecially cyclohexyl.

Aliphatic, aromatic, araliphatic or alicyclic diacylgroup with up to 20 carbon atoms mean, for example, groups of formulae

$-OOC(CH_2)_aCOO-$,

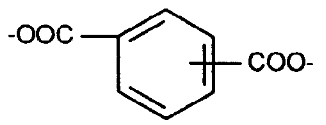,
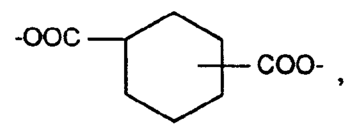,

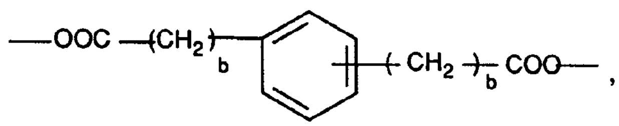,

wherein a and b have the already given meaning, that is, a number between 1 and 10 or between 1 and 5.

$C_6$-$C_{18}$ aryl mean, for example, unsubstituted or substituted phenyl, biphenyl or naphthyl which is substituted once or twice by $C_1$-$C_4$ alkyl.

Under $C_2$-$C_{10}$ alkylen should be understood, for example, ethylene, n-propylen, tetramethylen, 2,2-dimethyl-propylen, pentamethylen, octamethylen or decamethylen.

$C_4$-$C_8$ alkenylen is, for example, 2-butenylen, 2-hexanylen, 3-hexanylen or 2-octanylen.

It is particularly preferred to use polymers with a repeating unit of formulae

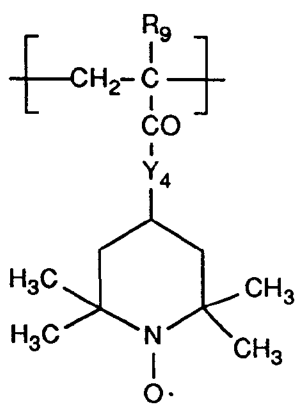

or

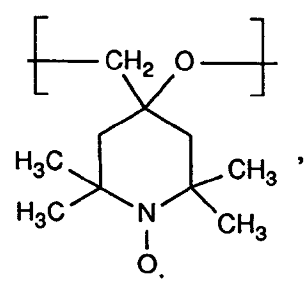,

wherein $R_9$ means hydrogen or methyl and $Y_4$ means -O- or -NH-.

The photoreceptor according to the present invention is fabricated by forming a charge generating layer of the invention on a substrate and then forming a charge transporting layer thereupon, or by forming a charge transporting layer on a substrate and then forming a charge generating layer of the invention thereupon. That is, the photoreceptor according to the invention may have a structure of substrate/charge generating layer/charge transporting layer or substrate/charge transporting layer/charge generating layer. But, the former one is preferred in view of practical application.

The charge generating layer of the invention is formed, for the case of substrate/charge generating layer/charge transporting layer structure, by coating the substrate or, for the case of substrate/charge transporting layer/charge generating layer structure, by coating the charge transporting layer, with a dispersion liquid in which at least one of the aforementioned pigments, a stabilizer of the invention, a polymer binder and a solvent are contained.

The above dispersion liquid can be prepared in various ways. For example, an organic pigment to be used can fistly be coated with a stabilizer of the invention, which is then mixed with a binder polymer and a solvent, thereby yielding a dispersion liquid.

In this case a desired amount of the nitroxyl compound is dissolved in an organic solvent. Then, the pigment is suspended in this solution according to a conventional method, and the thus obtained suspension is milled in a conventional mill upon necessity. The pigment mixture is isolated by distillation of the solvent and dried subsequently. Herein, the amount of the stabilizer is chosen so that it is 1-100, preferably 1-10 wt% relative

to the amount of the pigment for the case of stabilizer of the aforementioned (ii), and 0.01-100, preferably 0.1-15 wt% relative to the amount of the pigment for the case of aforementioned (iia).

Another way of preparing a dispersion liquid is to only mix at least one of the aforementioned pigments, a polymer binder, a solvent and a stabilizer of the present invention. Herein, the concentration of the stabilizer is selected in the same manner as in the case described above. That is, when using a stabilizer of the aforementioned (ii), the amount thereof is adjusted so that it is 1-100, preferably, 1-10 wt% relative to the amount of the pigment. When a stabilizer of the aforementioned (iia) is used, the amount thereof is chosen so that it is 0.01-100, preferably, 0.1-15 wt% relative to the amount of the pigment.

In the preparation of the dispersion liquid, any conventionally used polymer binder, such as polycarbonate resin, polyester resin, polyamide resin or the like can be used for the preparation of the dispersion liquid.

The charge generating layer is formed, for the case of substrate/charge generating layer/ charge transporting layer structure, by coating charge generating layer, and for the case of substrate/charge transporting layer/charge generating layer structure, by coating the substrate with a dispersion liquid containing at least a charge transporting material, a polymer binder and a solvent.

In the preparation of the above liquid, any conventionally used charge transporting material, such as N,N'-diphenyl-N,N'bis(dimethylphenyl)-benzidin, triphenylmethane, a stylbene derivative, an enamine derivative, a hydrazone derivative or the like can be used. Similarly, any conventionally used polymer binder and solvent can be used.

The coating of the charge generating and charge transporting layers can be done by any of the conventional methods, and the thickness of these layers can be chosen in accordance with requirements.

As a substrate any electroconducting material can be used, and is not particularly limited.

Another object of the invention is a process for stabilizing the charge generating layer of a photoreceptor with a charge transporting layer, the charge generating compound in the charge generating layer being selected from the group consisting of pyrrolopyrrol, mono- or dithio-pyrrolopyrrol, azo-pigments, quinacridone, phthalocyanine, indanthrone, flavathrone, pyranthrone, anthraquinon, perylene, dioxazine, perinone, thioindigo, isoindoline, isoindolinon and metal complexes, which comprises incorporating in the charge generating layer an stabilizing amount of (ii) of a nitroxyl or hydroxylamino compound composed of at least an unsubstituted or substituted 5-, 6- or 7-membered heterocycle containing a divalent group of formula

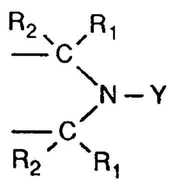 (I) or 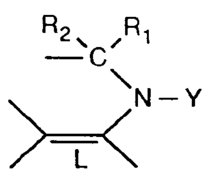 (II),

wherein $R_1$ and $R_2$ independently represent methyl, ethyl or phenyl or altogether form a 4-12 membered aliphatic ring, L represents an aromatic residue, Y means O· or OH, or an acid addition salts thereof, or
(iia) of a condensation or addition polymer the repeating molecular unit of which contains at least a nitroxyl or hydroxylamino group containing residue, or is substituted by a nitroxyl or hydroxylamino group containing side group, as well as a mixture among them or a mixture with nitroxyl- or hydroxylamine-free components.

A further object of the invention is the use of (ii) of a nitroxyl or hydroxylamino compound composed of at least an unsubstituted or substituted 5-, 6- or 7-membered heterocycle containing a divalent group of Formula

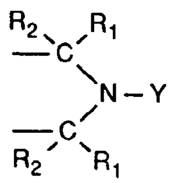 (I) or 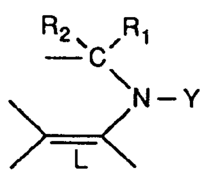 (II),

wherein $R_1$ and $R_2$ independently represent methyl, ethyl or phenyl or altogether form a 4-12 membered aliphatic ring, L represents an aromatic residue, Y means O· or OH, or an acid addition salts thereof, or
(iia) of a condensation or addition polymer the repeating molecular unit of which contains at least a nitroxyl or hydroxylamino group containing residue, or is substituted by a nitroxyl or hydroxylamino group containing side group, as well as a mixture among them or a mixture with nitroxyl- or hydroxylamine-free components, for stabilizing charge generating compounds selected from the group consisting of pyrrolopyrrols, mono- or dithio-pyrrolopyrrols, azo-pigments, quinacridones, phthalocyanines, indanthrones, flavathrones, pyranthrones, anthraquinons, perylenes, dioxazines, perinones, thioindigos, isoindolines, isoindolinons and metal complexes, in a photoreceptor against degradation.

The above described preferred embodiments reads also on these further objects.

Now, the present invention will be described more concretely with reference to the following examples. It should be noted that the present invention is by no means restricted to them.

Example 1:

(1) Preparation of a dispersion liquid for forming charge generating layer

0.23 g of dithioketopyrrolopyrrol (DTPP) fine particles coated with butyral resin (BM-S, commercial product of Sekisui Kagaku Co.), the weight ratio therebetween being 80:20, 6.0 g of 1,2-dichloroethane, 10 g of glass beades (GB603B, commercial product of Toshiba Baldwin Co.) and none or one selected from the group consisting of nitroxyl compounds according to the invention.

LS-1

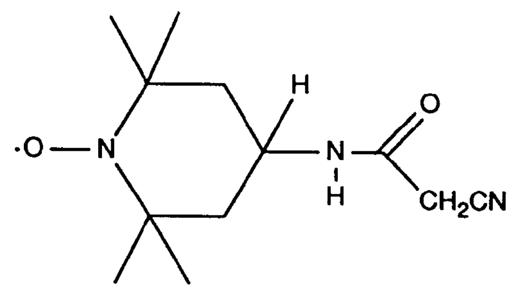

LS-2

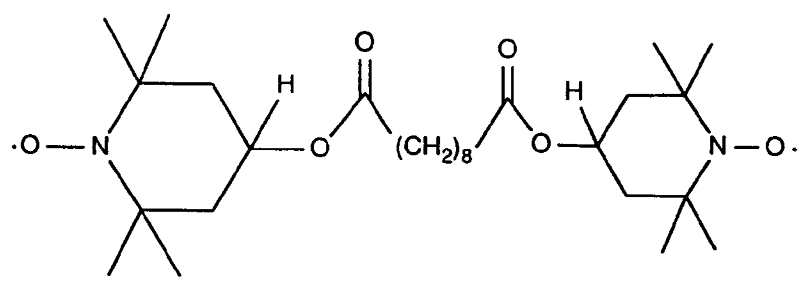

LS-3

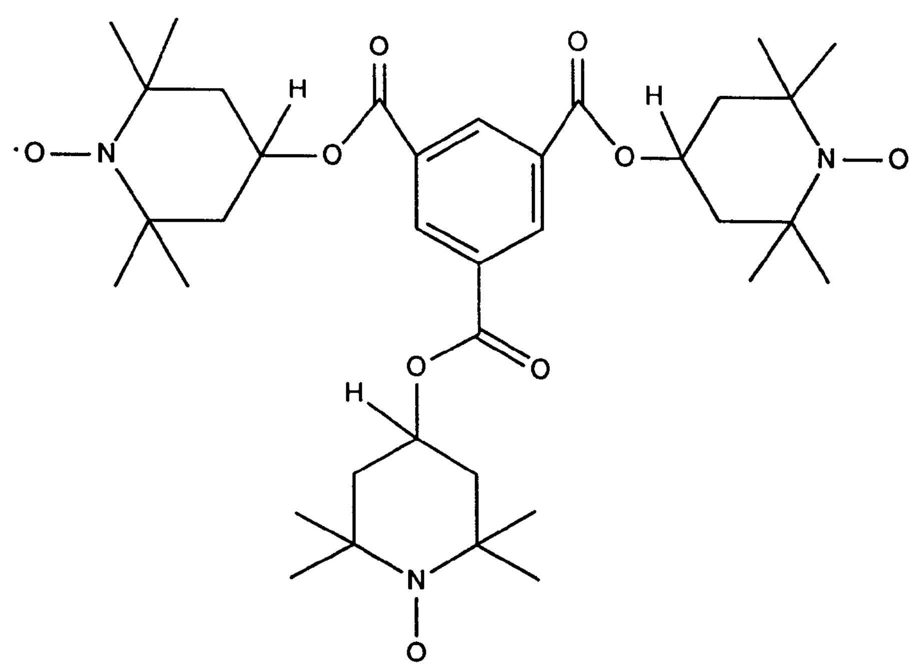

LS-4

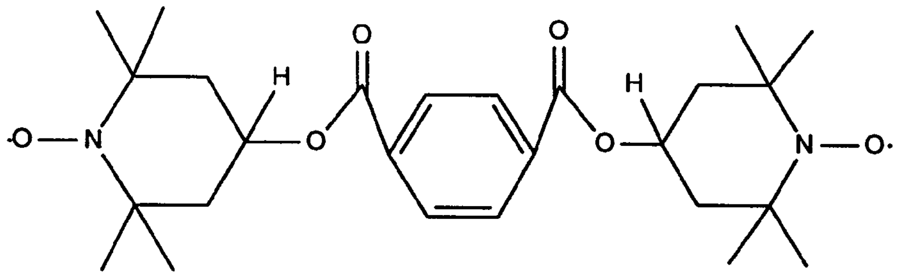

LS-5

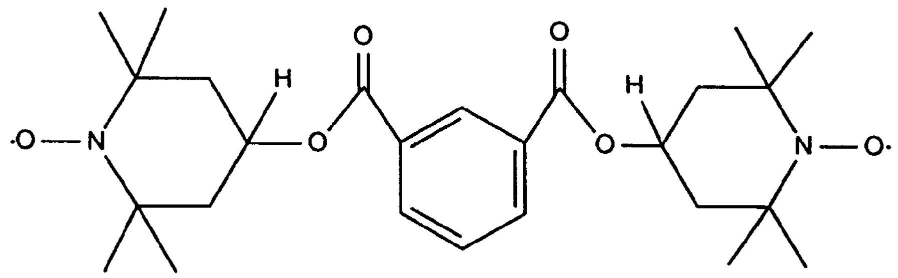

LS-6

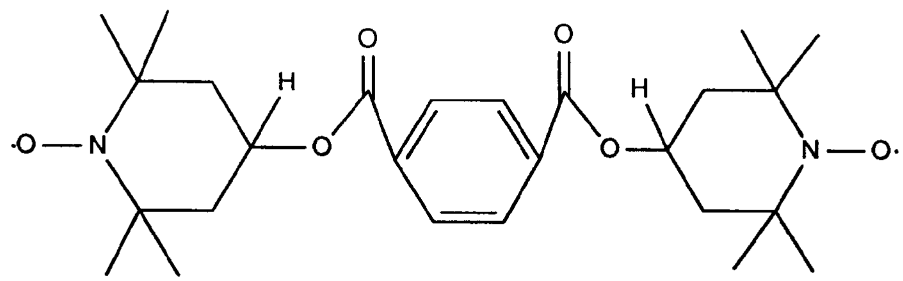

LS-7

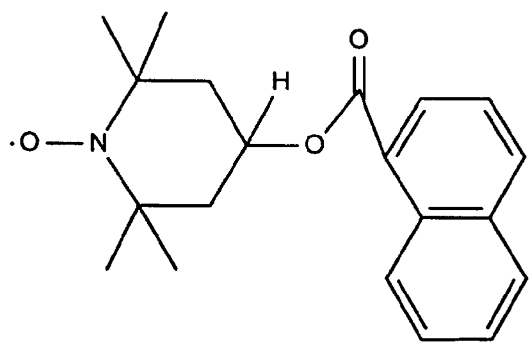

LS-8

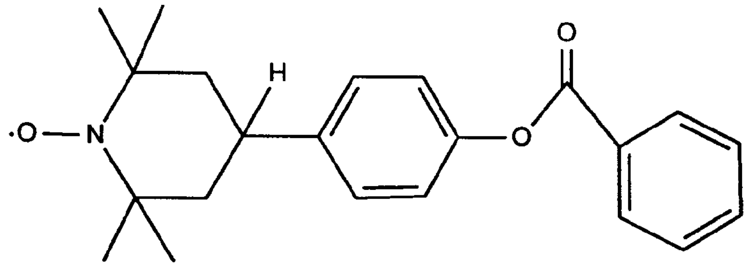

LS-9

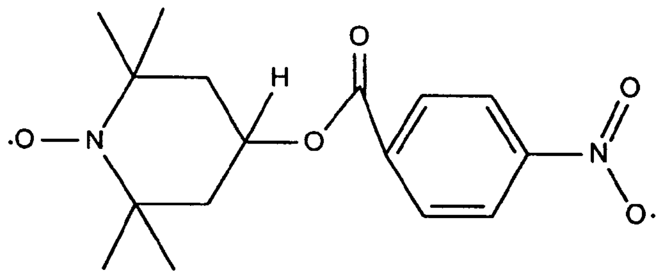

LS-10

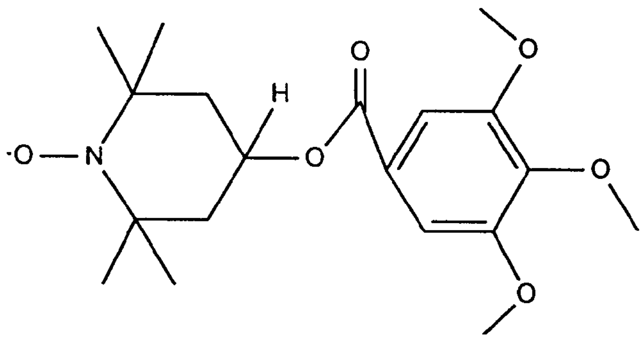

LS-11

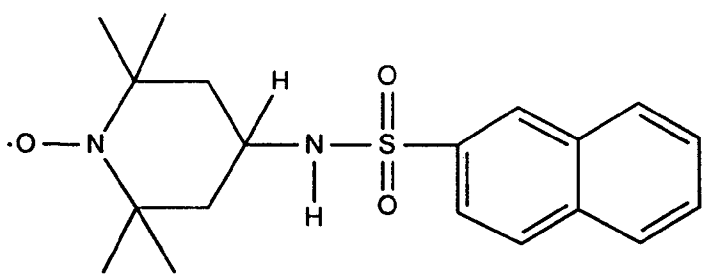

LS-12

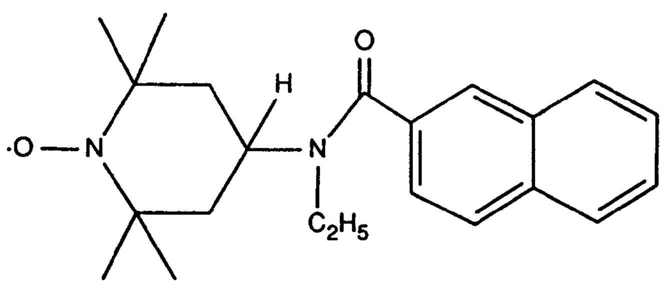

LS-13

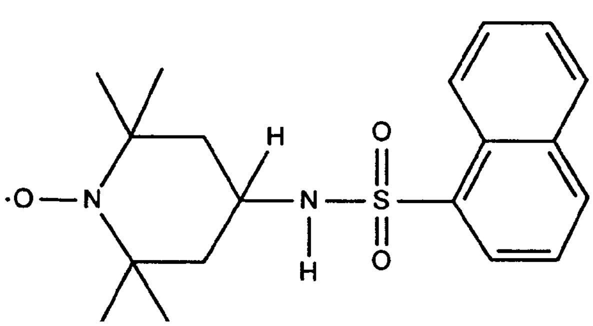

LS-14

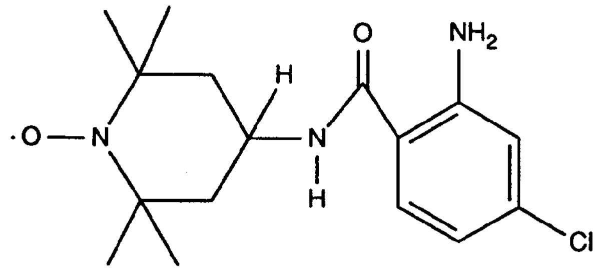

LS-15

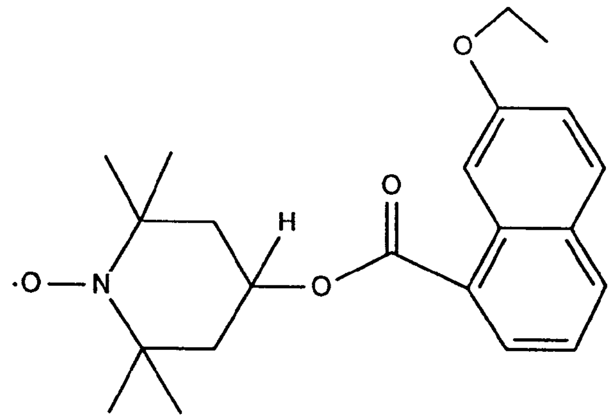

LS-16

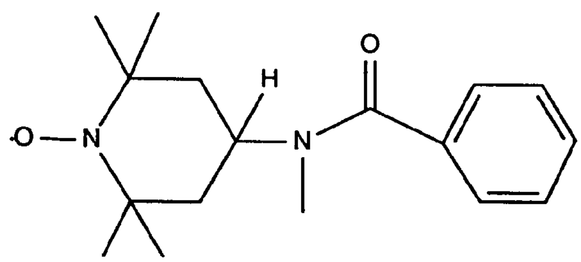

LS-17

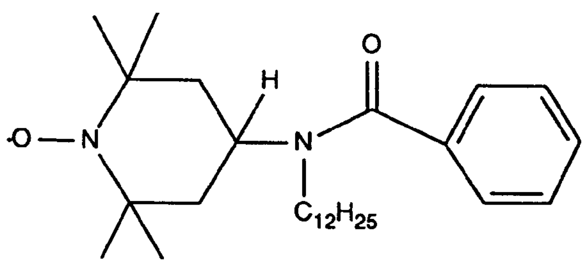

LS-18

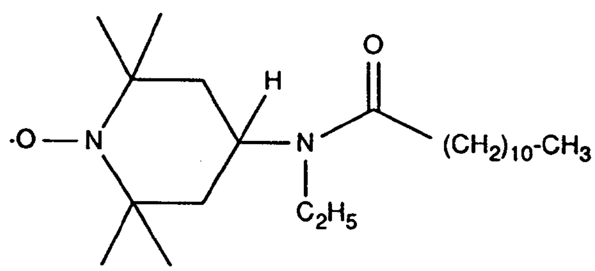

LD-19 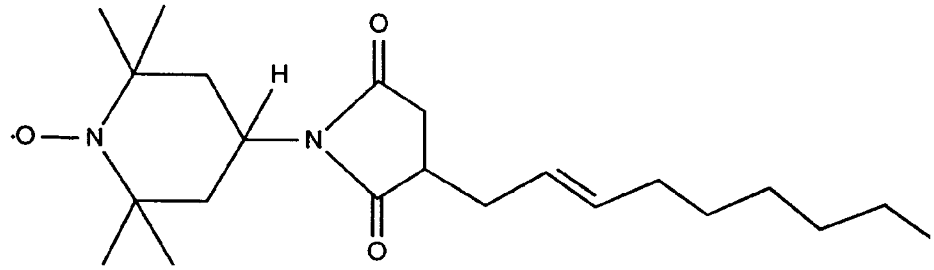

LS-20 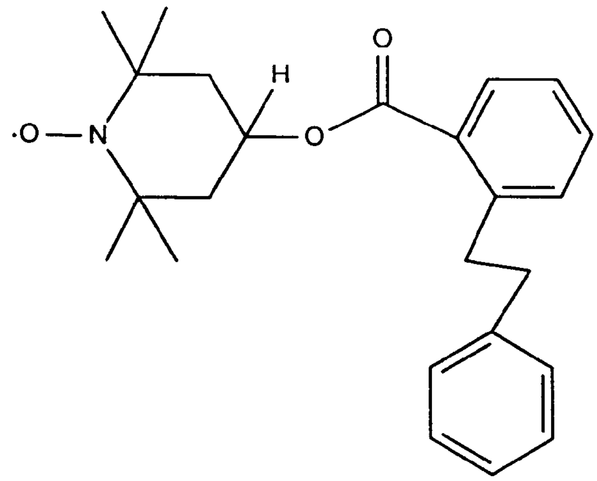

LS-21 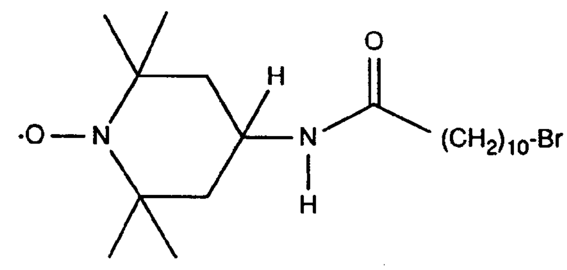

are mixed, which is then milled using a commercial ball mill apparatus to obtain a dispersion liquid for forming a charge generating layer. Herein, the concentration of the above nitroxyl compounds is adjusted so that it is 3 or 10 wt% relative to the above DTPP. (To the free bonds in the above formulae are linked $CH_3$-groups).

(2) Preparation of dispersion liquid for forming charge transporting layer

1.0 g of N,N'-bis(2,4-dimethylphenyl)-N,N'-diphenyl-[1,1'-biphenyl]-p-diamine, 1,0 g of polycarbonate (Z-200, a commercial product of Mitsubishi Gas Chemical Co.) and 6.0 g of toluene are mixed to obtain a dispersion liquid for forming a charge transporting layers.

(3) Preparation of photoreceptor

A dispersion liquid for forming charge generating layer obtained in the above (1) is applied over an aluminum substrate using a wire bar (a KCC bar No. 1, a commercial product of RK Print-Coat Instrument Ltd.), which is dried at 50°C for 30 minutes to obtain a charge generating layer. Then, the dispersion liquid for forming charge transporting layer obtained in the above (2) is applied over the above obtained charge generating layer using a wire bar (a KCC bar No. 8, a commercial product of RK Print-Coat Instrument Ltd.), which is then dried at 50°C for 30 minutes to thereby obtain a photoreceptor.

(4) Examination of the effect of stabilizer

Examination of the effect of an added stabilizer is carried out by firstly examining the electrophotographic performance of the photoreceptor containing the above stabilizer, then, exposing it to white light irradiation, the irradiation intensity being 3000 Lux, for 24 hours, thereafter again examininig the electrophotographic performance. The electrophotographic performance of the above photoreceptor is measured using a commercially available paper analyzer (EPA-8100, Kawaguchi Electric Co.) by negatively charging it up using -6.0 kV corona discharge. Then, surface potential (Vs.P.) of the photoreceptor is measured, and subsequently it is irradiated with monochromic light (800 nm in wave length) using a halogen lamp at the intensity of 10 μW/cm$^2$, and the time required for the surface potential to become half the initial value thereof is measured in order to calculate sensitivity (E1/2). The results are listed in Table 1.

Charge generation materials used for the Experiments

DTPP

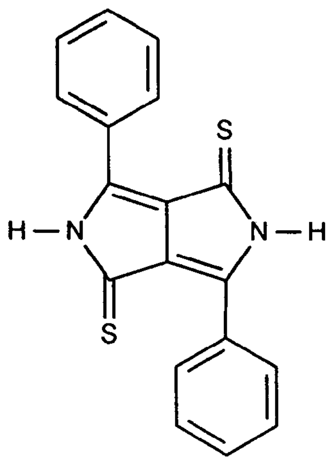

DPP-CL

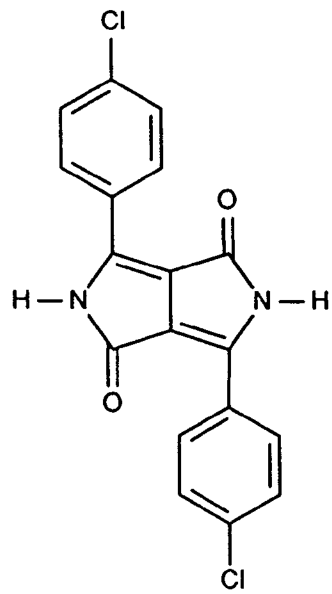

QA (Quinacridone)

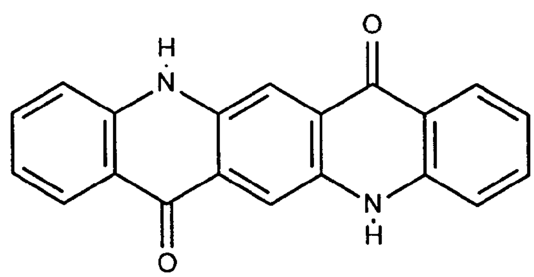

TI (4,4'-dimethyl-6,6'-dichlorothioindigo)

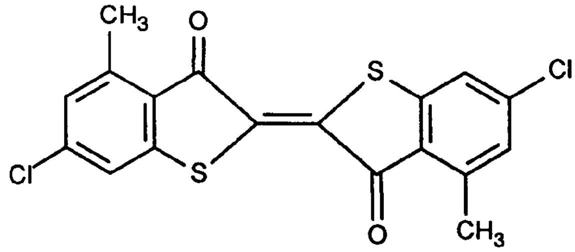

$H_2Pc$ 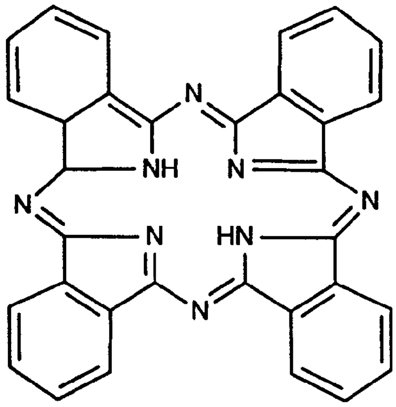 TiOPc 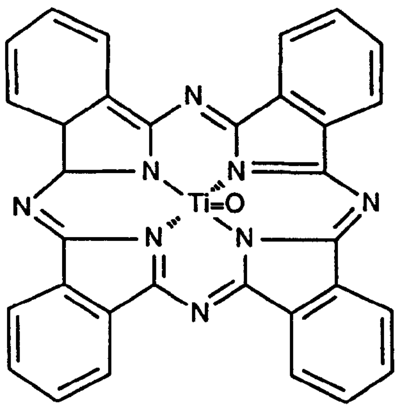

SS: Mixed formulation: (2,9-dichloro QA + $Cl_2$-DPP)

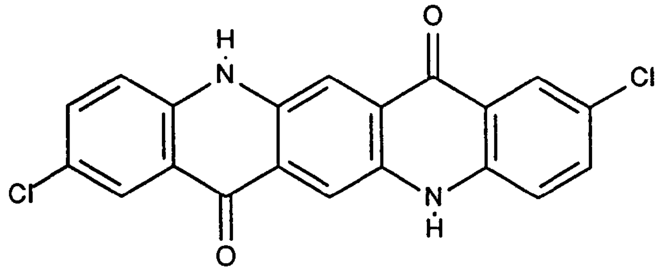 +

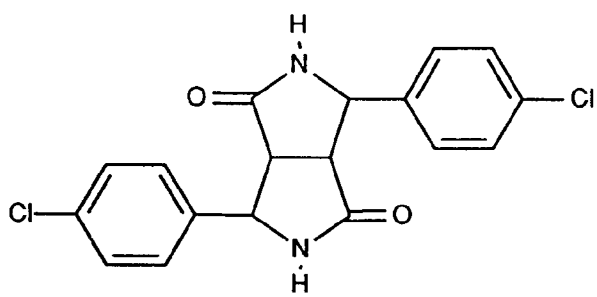 ,

AZO: Chlordian Blue (Structure unknown)

Table 1. Effect of addition of light stabilizer according to the present invention

| | Before Exposure | | | | After Exposure | | | |
|---|---|---|---|---|---|---|---|---|
| | | | Vr | D.D | VO | E1/2 | VR | D.D. |
| No LS* | -838 | 0.30 | -8 | 85.7 | -21 | 4.15 | -4 | 57.1 |
| LS-1 (3%)** | -888 | 0.31 | -9 | 87.5 | -520 | 0.27 | -8 | 70.8 |
| (10%) | -884 | 0.30 | -3 | 87.3 | -614 | 0.27 | -12 | 76.5 |
| LS-2 (3%) | -835 | 0.30 | -8 | 86.1 | -435 | 0.28 | -6 | 66.0 |
| (10%) | -851 | 0.31 | -7 | 87.2 | -562 | 0.28 | -14 | 74.7 |
| LS-3 (3%) | -705 | 0.28 | -7 | 85.5 | -348 | 0.25 | -4 | 64.7 |
| (10%) | -793 | 0.28 | -4 | 85.4 | -499 | 0.25 | -4 | 71.5 |
| LS-4 (3%) | -851 | 0.30 | -6 | 86.5 | -444 | 0.26 | -4 | 66.4 |
| (10%) | -826 | 0.29 | -5 | 86.2 | -527 | 0.28 | -8 | 72.7 |
| LS-5 (3%) | -731 | 0.31 | -4 | 84.0 | -275 | 0.27 | -4 | 56.7 |
| (10%) | -765 | 0.28 | -4 | 82.5 | -395 | 0.33 | -8 | 63.3 |
| LS-6 (3%) | -786 | 0.30 | -9 | 86.1 | -428 | 0.27 | -6 | 68.5 |
| (10%) | -747 | 0.27 | -3 | 84.7 | -480 | 0.27 | -8 | 71.7 |
| LS-7 (3%) | -833 | 0.29 | -8 | 86.1 | -417 | 0.24 | -6 | 65.7 |
| (10%) | -859 | 0.30 | -6 | 86.8 | -604 | 0.27 | -10 | 77.0 |
| LS-8 (3%) | -895 | 0.35 | -15 | 88.5 | -490 | 0.28 | -9 | 70.6 |
| (10%) | -851 | 0.35 | -14 | 88.6 | -590 | 0.30 | -19 | 78.1 |
| LS-9 (3%) | -828 | 0.29 | -6 | 85.4 | -384 | 0.26 | -5 | 62.0 |
| (10%) | -842 | 0.29 | -4 | 85.9 | -523 | 0.25 | -5 | 71.3 |
| LS-10 (3%) | -744 | 0.28 | -4 | 85.3 | -91 | 0.14 | -4 | 40.7 |
| (10%) | -750 | 0.28 | -6 | 83.2 | -490 | 0.27 | -9 | 70.8 |
| LS-11 (3%) | -754 | 0.29 | -4 | 84.4 | -148 | 0.39 | -3 | 41.2 |
| (10%) | -795 | 0.30 | -5 | 86.0 | 406 | 0.29 | -5 | 66.5 |
| LS-12 (3%) | -767 | 0.31 | -3 | 85.8 | -213 | 0.28 | -4 | 49.3 |
| (10%) | -814 | 0.34 | -5 | 86.6 | -415 | 0.34 | -9 | 67.2 |
| LS-13 (3%) | -604 | 0.32 | -3 | 83.8 | -164 | 0.34 | -4 | 51.7 |
| (10%) | -804 | 0.32 | -7 | 86.0 | -422 | 0.27 | -5 | 67.5 |
| LS-14 (3%) | -794 | 0.31 | -5 | 84.4 | -219 | 0.30 | -5 | 49.3 |
| (10%) | -848 | 0.36 | -6 | 88.0 | -543 | 0.32 | -11 | 75.1 |
| LS-15 (3%) | -812 | 0.30 | -3 | 85.6 | -266 | 0.28 | -5 | 53.0 |
| (10%) | -830 | 0.29 | -6 | 86.4 | -478 | 0.30 | -7 | 69.5 |
| LS-16 (3%) | -820 | 0.29 | 0 | 84.4 | -181 | 0.34 | -2 | 39.8 |
| (10%) | -850 | 0.29 | -6 | 86.7 | -473 | 0.28 | -6 | 68.3 |

| | | | | | | | | |
|---|---|---|---|---|---|---|---|---|
| LS-17 (3%) | -902 | 0.33 | -8 | 88.1 | -252 | 0.42 | -5 | 49.6 |
| (10%) | -899 | 0.36 | -12 | 89.0 | -488 | 0.30 | -14 | 70.9 |
| LS-18 (3%) | -877 | 0.30 | -7 | 86.9 | -302 | 0.27 | -6 | 52.0 |
| (10%) | -851 | 0.30 | -7 | 86.3 | -548 | 0.27 | -11 | 72.4 |
| LS-19 (3%) | -876 | 0.33 | -12 | 86.0 | -215 | 0.65 | -11 | 51.6 |
| (10%) | -936 | 0.36 | -14 | 88.9 | -491 | 0.32 | -19 | 69.7 |
| LS-20 (3%) | -861 | 0.30 | -6 | 87.1 | -308 | 0.28 | -5 | 54.5 |
| (10%) | -804 | 0.29 | -6 | 85.6 | -432 | 0.28 | -4 | 66.9 |
| LS-21 (3%) | -836 | 0.31 | -6 | 87.2 | -294 | 0.26 | -1 | 54.4 |
| (10%) | -808 | 0.30 | -5 | 86.0 | -441 | 0.28 | -7 | 67.6 |

VO: Surface voltage (V)
E1/2: Sensitivity ($\mu J/cm^2$)
Vr: Residual Voltage (V)
D.D.: Darc Decay (%)

Notes:

*) "No LS" indicates that the results listed are those obtained from a photoreceptor containing no light stabilizer as a control.

**) "LS-1 (3%)" means that the results listed are those obtained from a photoreceptor containing LS-1 at an amount of 3% by weight. LS-1 (10%) and so on should be understood in analogy.

Example 1a:

Photoreceptors are prepared in the same manner as in Example 1 except that none or one of other nitroxyl compounds of the invention, LS-22, LS-23, LS-24, LS-25, LS-26 and LS-27, listed below, is used. Electrophotographic performance is measured in the same manner as in Example 1. The results are listed in Table 1a.

LS-22 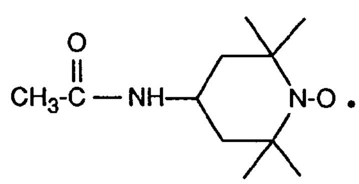

LS-23

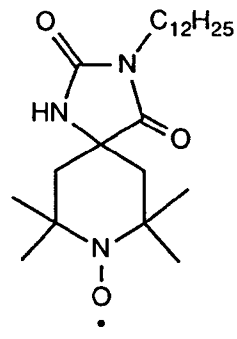

LS-24

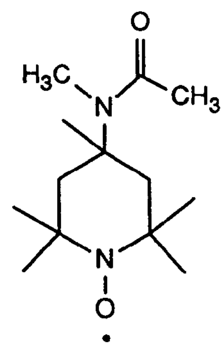

LS-25

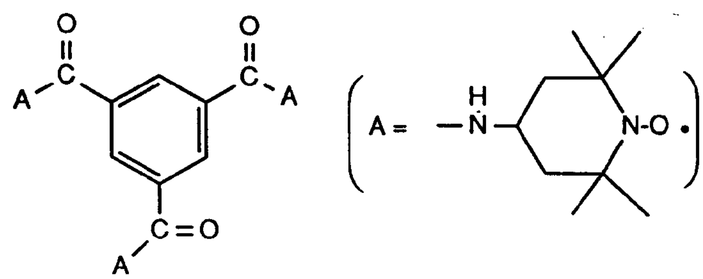

LS-26

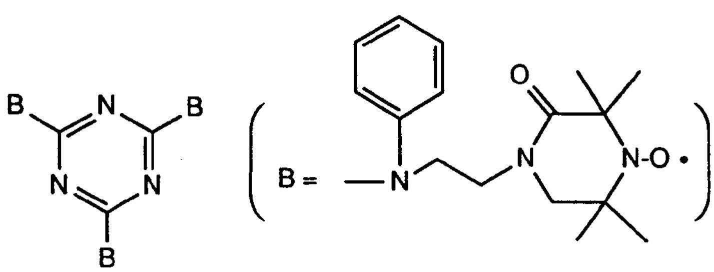

LS-27

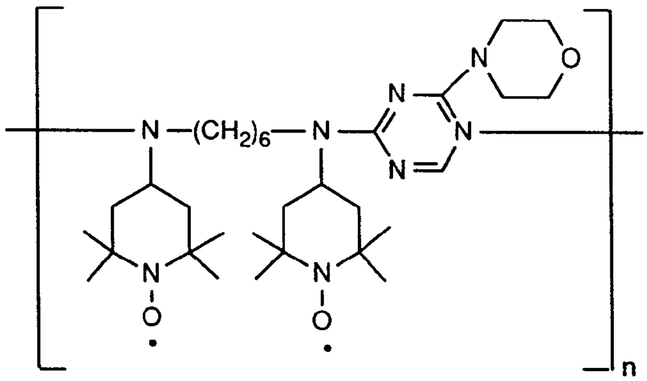

To the free bonds are linked $CH_3$-groups.

Table 1a. Effect of addition of light stabilizer according to the present invention

| | | Before Exposure | | | | After Exposure | | | |
|---|---|---|---|---|---|---|---|---|---|
| | | VO | E1/2 | Vr | D.D. | VO | E1/2 | Vr | D.D. |
| No LS | | -962 | 0.39 | -3 | 92.0 | -172 | 0.19 | -7 | 48.8 |
| LS-22 | (3 %) | -975 | 0.37 | -4 | 90.9 | -733 | 0.33 | -10 | 82.3 |
| | (10 %) | -728 | 0.35 | -6 | 91.6 | -641 | 0.37 | -14 | 86.4 |
| LS-23 | (3 %) | -920 | 0.33 | -6 | 89.0 | -589 | 0.29 | -11 | 75.9 |
| | (10 % | -918 | 0.32 | -4 | 89.2 | -728 | 0.34 | -14 | 81.2 |
| LS-24 | (3 %) | -999 | 0.37 | -6 | 91.0 | -653 | 0.31 | -8 | 78.1 |
| | (10 %) | -986 | 0.36 | -7 | 91.1 | -757 | 0.34 | -11 | 83.0 |
| LS-25 | (3 %) | -1075 | 0.48 | -17 | 92.6 | -871 | 0.46 | -33 | 86.8 |
| | (10 % | -1115 | 0.60 | -30 | 94.0 | -1001 | 0.63 | -78 | 90.6 |
| LS-26 | (3 %) | -967 | 0.35 | -6 | 90.5 | -646 | 0.30 | -9 | 78.5 |
| | (10 %) | -976 | 0.37 | -3 | 91.4 | -749 | 0.35 | -8 | 82.8 |
| LS-27 | (3 %) | -988 | 0.37 | -7 | 90.4 | -698 | 0.32 | -7 | 79.8 |
| | (10 %) | -936 | 0.35 | -8 | 89.3 | -698 | 0.35 | -7 | 80.7 |

Note: This table should be read in the same manner as Table 1.

Example 2:

(1) Preparation of dispersion liquid for forming charge generating layer

Dithioketo-pyrrolopyrrol (hereinafter, DTPP), diketopyrrolopyrrol (hereinafter, DPP), quinacridone (hereinafter, QA), dimethylchlorothioindigo (hereinafter, TI), metal-free phthalocyanine (hereinafter), H2Pc), titanyl phathalocyanine (hereinafter, TiOPc), a solid solution between quinacridone and diketo-pyrrolopyrrol (hereinafter, SS) or an azo-pigment (hereinafter, AZO); none or one of the nitroxyl compounds LS-7, LS-8, LS-15 and LS-18 in Example 1; polybutyral resin (BM-S), a commercial product of Sekisui Kagaku Co.); toluene and glass beads (GB603B, commercial product of Thoshiba Baldwin Co.) are mixed and milled to obtain a dispersion liquid for forming a charge generating layer. Herein, the weight ratio among charge generating compound, polybutyral resin and nytroxyl compound is selected so as to be 90:10:9.

(2) Preparation of dispersion liquid for forming charge transporting layer

A dispersion liquid for forming a charge transporting layer is prepared in the same manner as in Example 1.

(3) Preparation of photoreceptor

A photoreceptor is prepared in the same manner as in Example 1.

(4) Examination of the effect of a stabilizer

Examination of the effect of an added stabilizer is carried out in the same manner as in Example except that, in the measurement of electrophotographic performance, 750 nm wave length monochromic light is used for the TiOPc based photoreceptor, 500 nm wave length monochromic light is used for the DPP based photoreceptor, and 550 nm wave length monochromic light is used for the QA, TI, SS and AZO based photoreceptors. The results are listed in Table 2.

Table 2. Effect of addition of light stabilizer according to the present invention

| | Before Exposure | | | | After Exposure | | | |
|---|---|---|---|---|---|---|---|---|
| | VO | E1/2 | Vr | D.D. | VO | E1/2 | Vr | D.D. |
| DTPP | | | | | | | | |
| No LS* | -902 | 0.35 | -1 | 90.8 | -50 | 0.57 | -1 | 28.0 |
| LS-7** | -883 | 0.31 | -4 | 89.5 | -454 | 0.27 | -2 | 84.2 |
| LS-8 | -874 | 0.38 | -4 | 91.9 | -433 | 0.29 | -4 | 70.4 |
| LS-18 | -874 | 0.32 | -2 | 89.7 | -514 | 0.26 | -4 | 72.2 |
| LS-15 | -891 | 0.34 | -4 | 90.5 | -414 | 0.25 | -2 | 66.2 |
| DPP | | | | | | | | |
| No LS | -1163 | 5.75 | -171 | 96.8 | -163 | 7.75 | -38 | 70.6 |
| LS-7 | -1020 | 4.65 | -61 | 96.4 | -986 | 4.60 | -109 | 95.3 |
| LS-8 | -1303 | 5.95 | -94 | 98.6 | -1304 | 6.30 | -31 | 98.5 |
| LS-18 | -1290 | 5.95 | -44 | 98.8 | -1284 | 6.00 | -40 | 98.3 |
| LS-15 | -1025 | 4.80 | -52 | 94.2 | -1031 | 4.80 | -65 | 94.1 |
| QA | | | | | | | | |
| No LS | -1015 | 1.52 | -22 | 91.3 | -314 | 1.57 | -9 | 67.5 |
| LS-7 | -1193 | 1.62 | -30 | 95.9 | -656 | 1.37 | -8 | 80.3 |
| LS-8 | -1121 | 1.74 | -28 | 95.6 | -652 | 1.75 | -33 | 81.1 |
| LS-18 | -1204 | 1.74 | -28 | 95.6 | -697 | 1.46 | -28 | 81.5 |
| LS-15 | -1064 | 1.30 | -16 | 92.5 | -422 | 1.22 | -12 | 69.0 |
| TI | | | | | | | | |
| No LS | -878 | 0.88 | -6 | 95.7 | -376 | 0.64 | -6 | 78.7 |
| LS-7 | -905 | 0.83 | -6 | 96.6 | -1006 | 1.15 | -5 | 97.3 |
| LS-8 | -1045 | 1.21 | -20 | 97.6 | -1059 | 1.40 | -29 | 97.3 |
| LS-18 | -987 | 1.10 | -12 | 97.2 | -1021 | 1.23 | -15 | 97.3 |
| LS-15 | -901 | 0.94 | -10 | 96.5 | -935 | 1.15 | -10 | 96.6 |
| H2Pc | | | | | | | | |
| No LS | -1046 | 0.51 | -7 | 96.8 | -585 | 0.35 | -4 | 90.8 |
| LS-7 | -1060 | 0.56 | -13 | 96.4 | -654 | 0.41 | -11 | 91.7 |
| LS-8 | -1245 | 0.63 | -24 | 98.2 | -980 | 0.50 | -18 | 95.0 |
| LS-18 | -1072 | 0.51 | -9 | 97.3 | -915 | 0.43 | -12 | 95.3 |
| LS-15 | -1104 | 0.52 | -10 | 97.1 | -840 | 0.42 | -7 | 94.5 |
| TiOPc | | | | | | | | |
| No LS | -623 | 0.33 | -8 | 81.7 | -59 | 0.62 | -7 | 69.5 |
| LS-7 | -646 | 0.34 | -10 | 82.0 | -321 | 0.50 | -10 | 76.3 |
| LS-8 | -932 | 0.37 | -12 | 88.5 | -646 | 0.52 | -12 | 85.9 |
| LS-18 | -781 | 0.35 | -11 | 87.3 | -614 | 0.52 | -12 | 85.9 |
| LS-15 | -771 | 0.36 | -8 | 86.9 | -385 | 0.52 | -12 | 94.5 |
| SS | | | | | | | | |
| No LS | -875 | 1.49 | -12 | 89.0 | -709 | 1.88 | -18 | 83.8 |
| LS-7 | -1033 | 1.83 | -11 | 93.1 | -1115 | 3.15 | -16 | 95.4 |
| LS-8 | -1049 | 1.87 | -40 | 92.8 | -1151 | 3.35 | -23 | 95.7 |
| LS-18 | - 950 | 2.45 | -24 | 92.7 | -1063 | 4.10 | -28 | 96.0 |
| LS-15 | -1049 | 2.15 | -104 | 93.3 | -2274 | 3.60 | -145 | 96.3 |

| | | | | | | | | |
|---|---|---|---|---|---|---|---|---|
| AZO | | | | | | | | |
| No LS | -985 | 0.23 | -7 | 96.1 | -38 | 0.19 | -2 | 86.8 |
| LS-7 | -960 | 0.23 | -12 | 96.9 | -286 | 0.18 | -3 | 72.4 |
| LS-8 | -963 | 0.23 | -7 | 97.0 | -535 | 0.18 | -3 | 72.4 |
| LS-18 | -1015 | 0.22 | -7 | 96.5 | -307 | 0.16 | -4 | 71.0 |
| LS-15 | -1003 | 0.24 | -8 | 97.2 | -407 | 0.17 | -2 | 79.6 |

VO: Surface voltage (V)
E1/2: Sensitivity (μJ/cm$^2$)
Vr: Residual Voltage (V)
D.D.: Dark Decay (%)

Notes:

*) "No LS" indicates that the results listed are those obtained from a photoreceptor containing no light stabilizer as a control.

**) "LS-7" means that the results listed are those obtained from a photoreceptor containing LS-7 at an amount of 10 % by weight. LS-8 and so on should be understood in the same way.

Comparative Example

(1) Preparation dispersion liquid for forming charge generating layer

Dithioketo-pyrrolopyrrol (DTPP), none or one of the prior art light stabilizers of triethyleneglycol-bis[3-(3-t-butyl-5-methyl-4-hydroxyphenyl)propionate] (referred to as CLS-1), 1,6-hexanediol-bis[3-(3,5-di-t-butyl-4-hydroxyphenyl)propionate] (referred to as CLS-2), pentaerythrityl-tetrakis[3-(3,5-di-t-butyl-2-hydroxyphenyl)propionate] (referred to as CLS-3) and 2,2-thio-diethylene-bis[3,5-di-t-butyl-4-hydroxyphenyl)propionate] (referred to as CLS-4), butyral resin (BM-S, a commercial product of Sekisui Chemical Co.), 1,2-dichloroethane and glass beads (GB603B, commercial product of Toshiba Baldwin Co.) are mixed and milled to obtain a dispersion liquid for forming a charge generating layer. Herein, the weight ratio among charge generating compound, polybutyral resin and prior art light stabilizer is selected so as to be 90:10:9.

CLS-1;

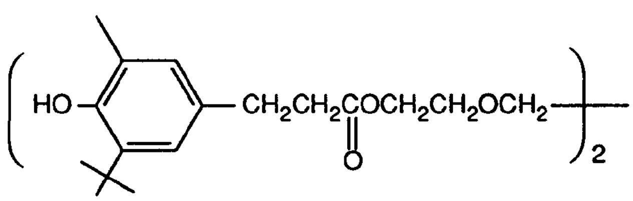

CLS-2;

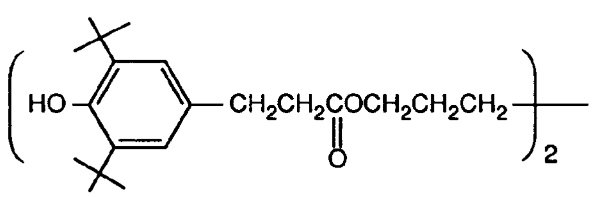

CLS-3; 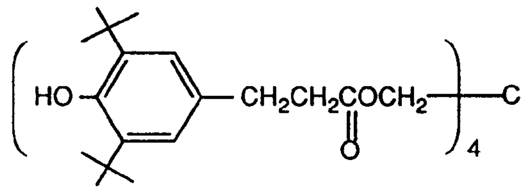

CLS-4; 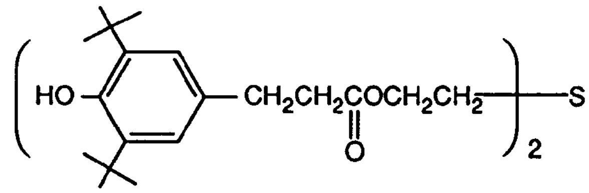

(2) reparation of dispersion liquid for forming charge transporting layer

A dispersion liquid for forming a charge transporting layer is prepared in the same manner as in Example 1.

(3) Preparation of photoreceptor

A photoreceptor is prepared in the same manner as in Example 1.

(4) Examination of the effect of a stabilizer

Examination of the effect of an added stabilizer is carried out in the same manner as in Example 1. The results are listed in Table 3.

Table 3. Effect of addition of light stabilizer according to the present invention

| | Before Exposure | | | | After Exposure | | | |
|---|---|---|---|---|---|---|---|---|
| | VO | E1/2 | Vr | D.D. | VO | E1/2 | Vr | D.D. |
| No LS* | -896 | 0.48 | -7 | 91.5 | -132 | 0.35 | -5 | 37.1 |
| CLS-1** | -892 | 0.53 | -9 | 93.3 | -256 | 0.30 | -6 | 54.3 |
| CLS-2 | -809 | 0.55 | -7 | 93.1 | -240 | 0.33 | -6 | 55.4 |
| CLS-3 | -825 | 0.55 | -6 | 93.5 | -158 | 0.35 | -6 | 45.6 |
| CLS-4 | -841 | 0.55 | -6 | 94.4 | -188 | 0.33 | -6 | 55.3 |

VO: Surface voltage (V)
E1/2: Sensitivity (μJ/$cm^2$)
Vr: Residual Voltage (V)
D.D.: Dark Decay (%)

Notes:

*) "No LS" indicates that the results listed are those obtained from a photoreceptor containing no light stabilizer as a control.

**) "CLS-1" indicates that the results listed are those obtained from a photoreceptor containing prior art light stabilizer CLS-1 at an amount of 10 % by weight. CLS-2 and so on shcould be understood in the same fashion.

From the results obtained from Examples 1, 1a and 2, it is obvious that the nitroxyl compounds according to the invention can be applied as excellent light stabilizers to photoreceptors. These light stabilizers are not only applicable to various charge generating compounds such as DTPP, DPP, H2Pc, TiOPc, azo-based compounds and others, but also shows excellent effect against the degradation of photoreceptor performance. From the comparison among the results obtained from Examples 1, 1a, 2 and Comparative Example, one can easily understand that the photoreceptor according to the present invention is by far superior to the prior art photoreceptor.

## Claims

1. A photoreceptor comprising a charge generating layer and a charge transporting layer, characterized in that said charge generating layer contains:
(i) as a charge generating compound at least one selected from the group consisting of pyrrolopyrrol, mono- or dithio-pyrrolopyrrol, azo-pigments, quinacridone, phthalocyanine, indanthrone, flavanthrone, pyranthrone, anthraquinon, perylene, dioxazine, perinone, thioindigo, isoindoline, isoindolinon and metal complexes; and
(ii) as a stabilizer, 1-100 wt%, relative to the weight of the above charge generating compound (i), a compound composed of at least an unsubstituted or substituted 5-, 6- or 7- membered heterocycle containing a divalent group of Formula

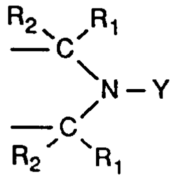 (I) or 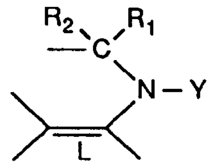 (II),

wherein $R_1$ and $R_2$ independently represent methyl, ethyl or phenyl or altogether form a 4-12 membered aliphatic ring, L represents an aromatic residue, Y means O· or OH, or an acid addition salts thereof, or

(iia) as a stabilizer, 0.01-100 wt%, relative to the weight of the above charge generating compound (i), of a condensation or addition polymer the repeating molecular unit of which contains at least a nitroxyl or hydroxylamino group containing residue, or is substituted by a nitroxyl or hydroxylamino group containing side group, as well as a mixture among them or a mixture with nitroxyl- or hydroxylamine-free components.

**2.** A photoreceptor according to claim 1, wherein the nitroxyl compound of (ii) is an organic or inorganic salt of the nitroxyl compound of (ii).

**3.** A photoreceptor according to claim 1, wherein the nitroxyl or hydroxylamino compound of (ii) is represented by formulae

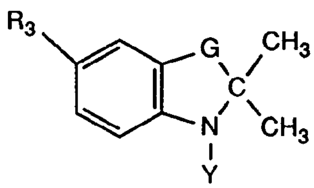

(III),

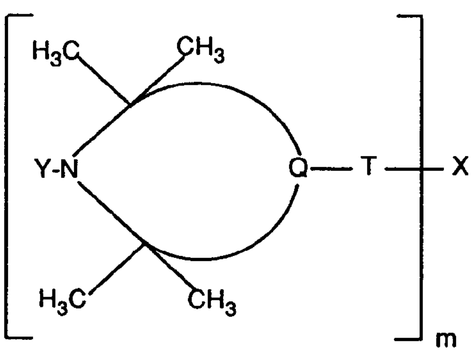

(IV),

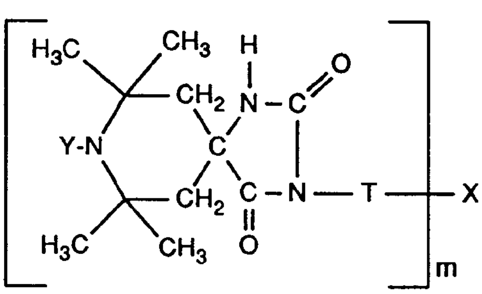

(V),

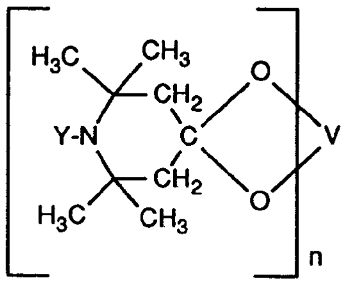

(VI)

or

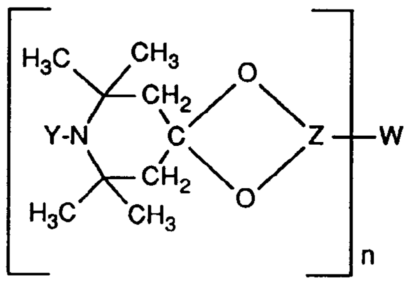

(VII),

wherein $R_3$ is $C_1$-$C_{18}$alkoxy, G means a divalent group of Formula $-CR_4=CH-$ or $-CHR_4-CH_2-$ and $R_4$ is $C_1$-$C_{18}$alkyl,
Q represents a group of formulae

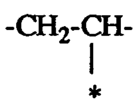 , 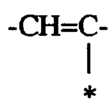 , 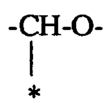 , 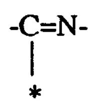 , 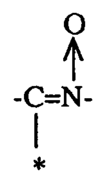 , 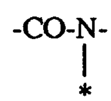 , 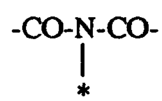 ,

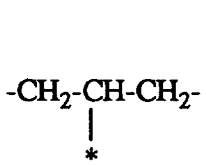 , 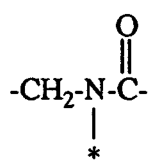 , 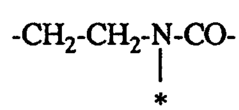 , 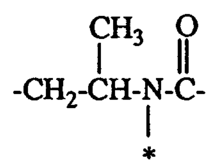

or

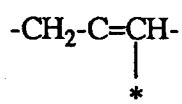 ,

wherein the bond indicated by * means a bond which leads to T,
T is a direct bond or a group of Formula

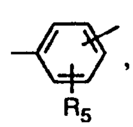 ,

wherein $R_5$ means hydrogen, halogen or $C_1$-$C_4$alkyl, or $-(CH_2)_r-$, wherein r is 1 or 2,
m is a number of 1, 2, 3, or 6,

X is, if m=1, hydrogen, $C_1$-$C_{18}$alkyl, unsubstituted or substituted phenyl which is substituted by $C_1$-$C_4$alkoxy, phenyl or halogen or, under the condition that T means no direct bond if it is bound to an N-atom, a group of formula -OCO-$NR_6R_7$, -$OSO_2$-$NR_6R_7$, -OCO-$R_7$, -$COOR_7$, -$CONR_6R_7$, -$NR_6$-$COR_7$, -$NR_6$-$CONR_6R_7$, -$OR_7$ or $NR_6R_7$, wherein $R_6$ means hydrogen or $C_1$-$C_{18}$alkyl, $R_7$ is $C_1$-$C_{18}$alkyl, $C_2$-$C_{12}$alkenyl, $C_5$-$C_{12}$cycloalkyl, unsubstituted or substituted phenyl or naphthyl which is substituted by $C_1$-$C_4$alkyl, $C_1$-$C_4$alkoxy, halogen, phenyl or nitro, or a group -$(CH_2)_s$-$CHR_8R_9$, s means zero, 1, 2 or 3, $R_6$ means hydrogen, methyl or phenyl and $R_2$ means -OH, halogen, a group -$COOCH_3$ or -$COOC_2H_5$, or
X is, if m=2, a group of Formula -$(CH_2)_p$- or, under the condition that T means no direct bond if it is bound to an N-atom, a group of Formula -O-$(CH_2)_p$-O-, -$NR_6$-$(CH_2)_p$-$NR_6$-, -OCO-F-COO-, -$NR_6$-CO-F-CO-$NR_6$-, -OCO-NH-F-NH-COO- or
-$NR_6$-CONH-F-NHCO-, $NR_6$-, wherein F represents -$(CH_2)_p$-,

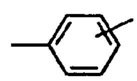

or

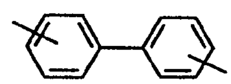

and p means a number between 2 and 10, or
X is, if m=3, a group

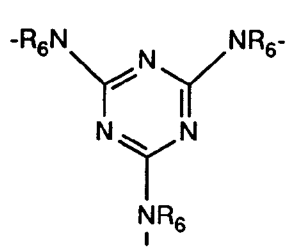 , 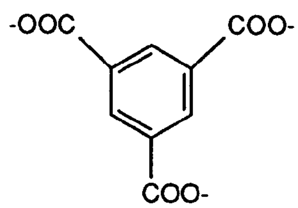 or 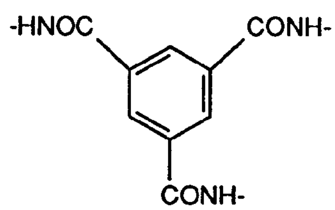 ,

or
if m=4, a group

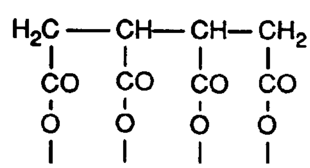

or
X is, if m=6, a group

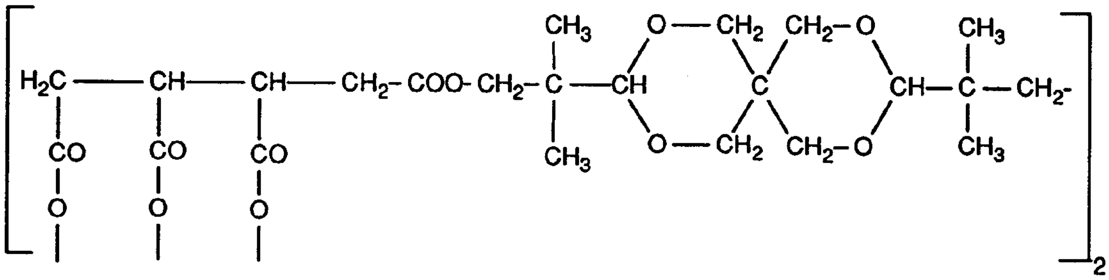

n is a number of 1 or 2,
V means, if n=1, $C_2$-$C_8$ alkylen or hydroalkylen or $C_4$-$C_{22}$acyloxyalkylen, and if n=2, the group $(-CH_2)_2C(CH_2-)_2$ or
$>C<$, and
Z is a group of formulae

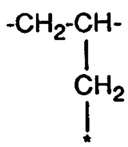 or 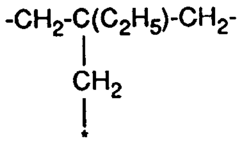 ,

wherein the bond indicated by * represents the bond which leads to W,
W means, if n=1, a group $-OCOR_{10}$, wherein $R_{10}$ is $C_1$-$C_{18}$ alkyl, unsubstituted or substituted phenyl or naphthyl which is substituted by $C_1$-$C_4$ alkyl, $C_1$-$C_4$ alkoxy or halogen,
if n=2, a group of Formula $-OCO-(CH_2)_p-COO-$ or

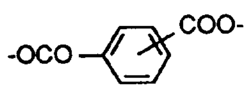 ,

and
Y means O· or OH.

**4.** A photoreceptor according to claim 1, wherein the compound of (ii) is a nitroxyl compound represented by formulae

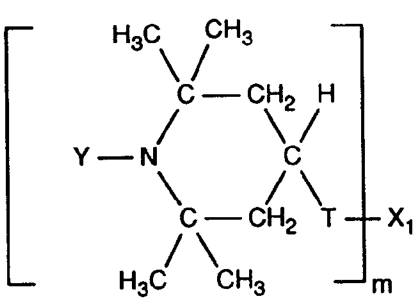

(VIII)

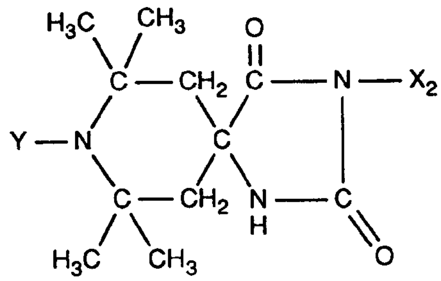

(IX)

or

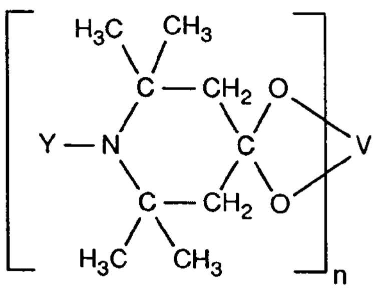

(X),

wherein
T means a direct bond,
m is 1, 2 or 3,
$X_1$ is, if m=1, $C_1$-$C_{18}$ alkyl or -OCO-$R_7$, -$NR_6$-$COR_7$, wherein $R_6$ is hydrogen or $C_1$-$C_{18}$alkyl and $R_7$ is $C_1$-$C_{18}$ alkyl or unsubstitued or substituted phenyl or naphthyl which is substituted by $C_1$-$C_4$ alkyl, $C_1$-$C_4$ alkoxy, phenyl or halogen,
$X_1$ is, if m=2, a group -OCO-$(CH_2)_p$-COO- or -$NR_6$CO-$(CH_2)_p$-$CONR_{15}$-, wherein p is a number between 2 and 8,

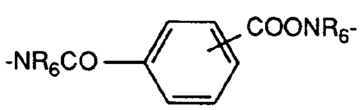

or

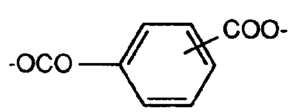

or
$X_1$ is, if m=3, a group

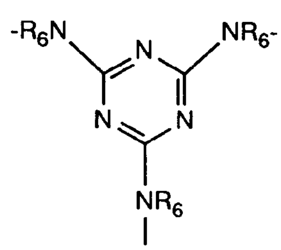

or

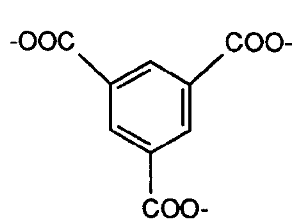

$X_2$ is $C_1$-$C_{18}$ alkyl,
n is the number 2, and
V is the group $(-CH_2)_2C(CH_2-)_2$ or $>C<$ and
Y is O·.

**5.** A photoreceptor according to claim 1, wherein the compound of (iia) is an organic or inorganic salt of the nitroxyl compound of (iia).

6. A photoreceptor according to claim 1, wherein the nitroxyl or hydroxylamino compound of (iia) has a repeating molecular unit which contains at least a residue of formula

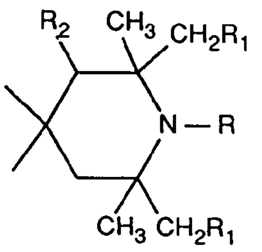

(Ia)

or is at least once directly or indirectly substituted by one of the side groups of formulae

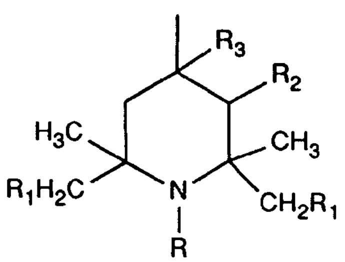 , 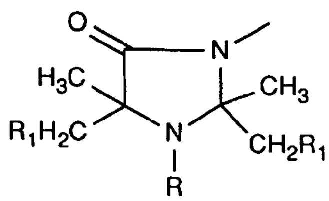 , 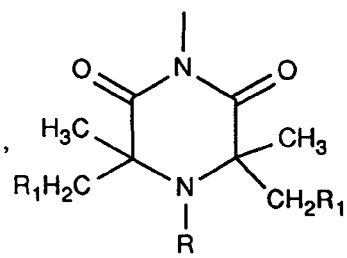 ,

(IIa) (IIIa) (IVa)

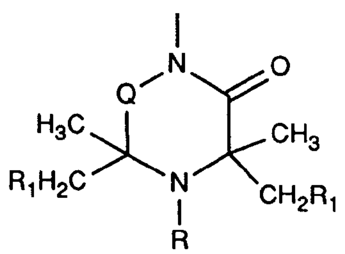 , 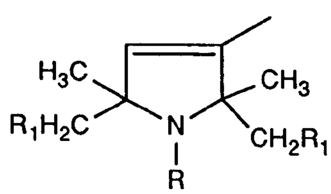 or 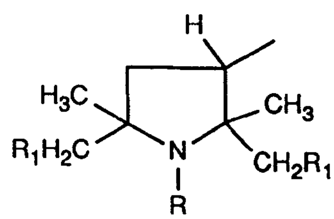 ,

(Va) (VIa) (VIIa),

wherein R means O· or OH, $R_1$ means hydrogen or $C_1$-$C_4$alkyl, $R_2$ means hydrogen or $C_1$-$C_4$alkyl, $R_3$ means hydrogen or a free valence and Q means $-CH_2-$, $-(CH_2)_2-$ or $-CH_2-CH(CH_3)-$, as well as is mixed polymer there among them or with nitroxyl- and hydroxylamin-free components.

7. A photoreceptor according to claim 6, wherein the R in Formulae Ia-VIIa means O·.

8. A photoreceptor according to claim 6, wherein the repeating molecular unit of the nitroxyl or hydroxylamino compound contains at least a residue of formula

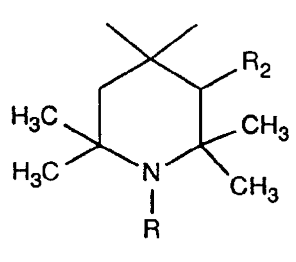

(VIIIa)

or is at least once directly or indirectly substituted by a side group of formula

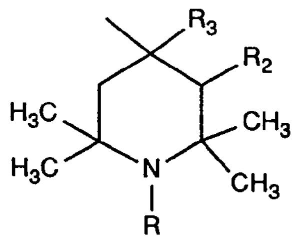

(IXa),

wherein R, $R_2$ and $R_3$ have the meaning given in claim 6.

**9.** A photoreceptor according to claim 6, wherein the repeating molecular unit of the nitroxyl or hydroxylamino compound contains at lest a residue of formulae

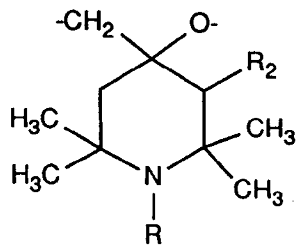 (Xa) or 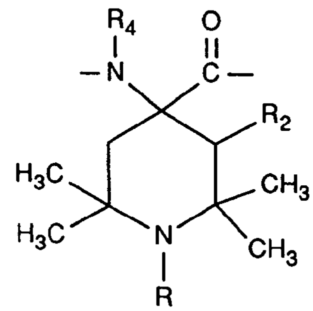 (XIa)

or is at least once substituted by a side group of formula

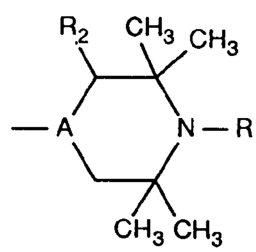

(XIIa),

wherein A is a group of formulae

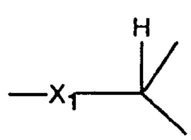 (XIIIa), 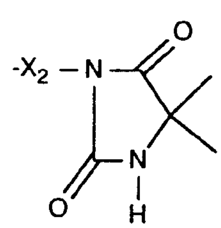 (XIVa)

or

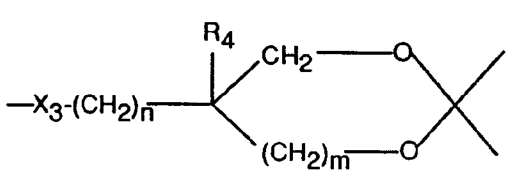

(XVa),

$R$ and $R_2$ have the meaning mentioned in claim 6, $R_4$ means hydrogen, methyl or ethyl, m is zero or 1, n means, if m is zero, then 1 and, if m is 1, then zero,
$X_1$ means a direct bond, -O- or a group of formulae -CO-O-, $-CO-NR_5-$,

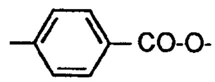 ,

$-CH_2-O-$, $-NR_5-$, $-O-CH_2CH_2-NH-$,
$-NH-CH_2CH_2-O-$, $-CO-NR_5-(CH_2)_p-CO-NH-$, $-NH-(CH_2)_p-$

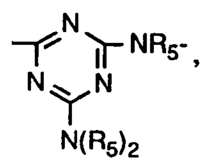

$-(CH_2)_p-CO-O-$,
wherein $R_5$ means hydrogen $C_1$-$C_{12}$alkyl, $C_5$-$C_7$cycloalkyl or $C_7$-$C_{11}$aralkyl and p means a number from 1 to 6, $X_2$ is a direct bond or a group of Formula $-(CH_2)_p-$, $-CO-O-CHR_5-CH_2-$ or $-CO-NR_4-CHR_5-CH_2-$, wherein $R_4$, $R_5$ and p have the above mentioned meaning, and $X_3$ means a direct bond, -O-, or a group of Formula -CO-O-, $-O-CH_2-O-$ or $-(CH_2)_p-$, wherein p has the above mentioned meaning.

**10.** A photoreceptor according to claim 1, wherein the polymer of (iia) has a repeating unit of formula

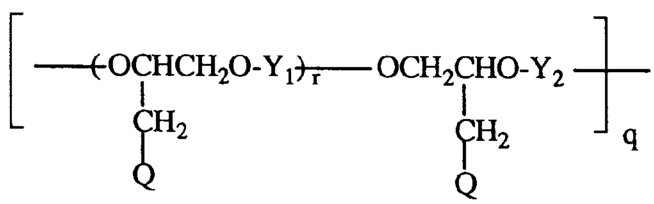 (XVIa),

wherein Q is a residue of Formula XIIa, in which A means a group
-O-CH<,
$-NR_5-CH<$,

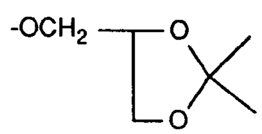 , 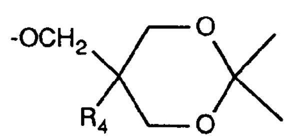 or 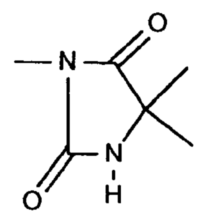 ,

R, $R_2$, $R_4$ and $R_5$ have the meaning mentioned in claim 9,
q is a number between 10 and 50 and r is zero or 1, and if r is zero,
$Y_2$ is an aliphatic, aromatic, araliphatic or alicyclic diacyl group with up to 20 carbon atoms,
if r is 1 and Q means a residue of Formula XIIa, wherein A is
-O-CH<,

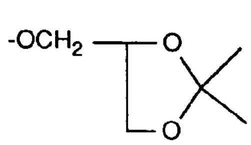 or 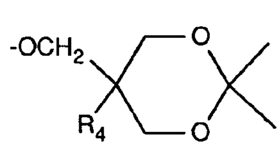 ,

$Y_1$ means a saturated, aliphatic diacyl group with up to 20 carbon atoms, a benzenedicarbonyl group, a cyclohexanedicarbonyl group, a group

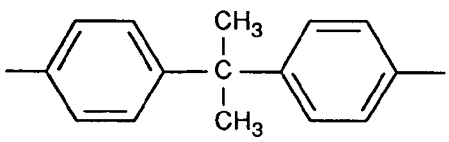 or 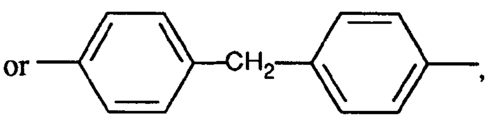 ,

and
if r is 1 and Q means a residue of Formula XIIa, wherein A is

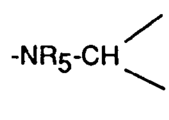 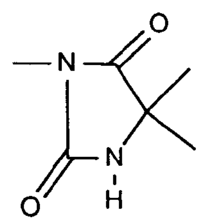 ,

$Y_1$ means a saturated aliphatic diacyl group with up to 20 carbon atoms, a benzenedicarbonyl group, a cyclohexanedicarbonyl group, a group

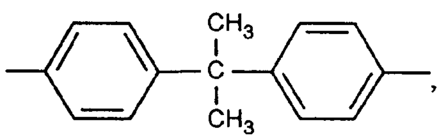 , 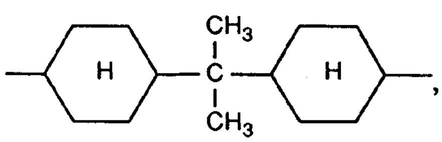 ,

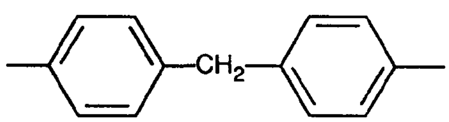 or 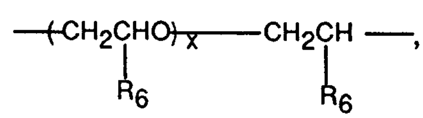 ,

wherein x is zero or a number of from 1 to 8 and $R_6$ means hydrogen or methyl, and
$Y_2$ means, if r is 1, a saturated aliphatic diacyl group with up to 20 carbon atoms, a benzenedicarbonyl group, a cyclohexanedicarbonyl group, an alkenyl group with from 2 to 10 carbon atoms, a xylylene group, a group

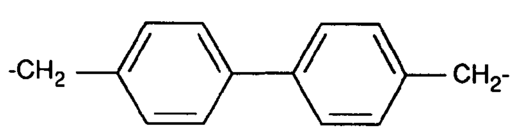

or $-CONH-Y_3-NHCO-$,
wherein $Y_3$ is an alkylene group group with 2 to 20 carbon atoms or an unsubstituted or methyl-substituted phenylene group.

**11.** A photoreceptor according to claim 1, wherein the polymer of (iia) has a repeating unit of the formula

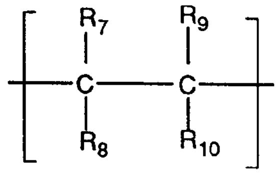

(XVIIa),

wherein $R_7$ is a group of formulae

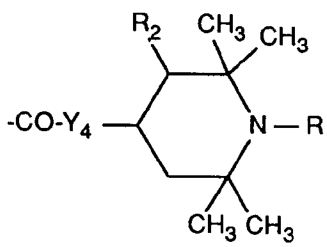

or

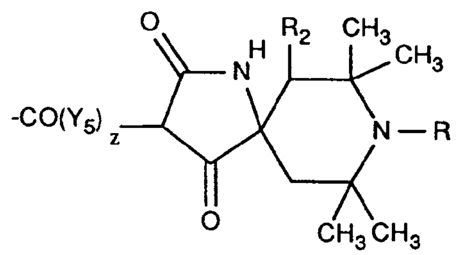

,

wherein R and $R_2$ have the above mentioned meaning, $Y_4$ is -O- or $-NR_5-$, wherein $R_5$ has the above mentioned meaning, $Y_5$ means a group $-O-CHR_{11}-CH_2-$,
wherein $R_{11}$ is hydrogen, methyl, ethyl, phenoxymethyl or phenyl and z means zero or 1, $R_8$, $R_9$ and $R_{10}$ are independently hydrogen or $C_1$-$C_4$ alkyl, $R_9$ can also be - COOH, and if $R_8$ and $R_9$ are hydrogen, $R_7$ and $R_9$ altogether form a group of formula

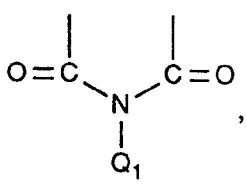

,

wherein $Q_1$ is a group

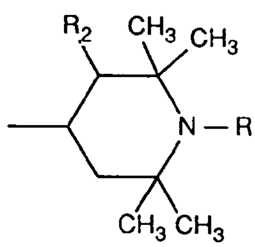

,

in which R and $R_2$ have the meaning mentioned in claim 6, as well as copolymers of XVIIa with a compound containing at least a polymerizable double bond, wherein at least a repeating unit XVIIa is contained per 10 co-components.

**12.** A photoreceptor according to claim 1, wherein the polymer of (iia) is a copolymer from

1) at least unsaturated derivative of formula

$$R_{12}-Y_6-CO-CH=CH-CO-Y_7-R_{13} \qquad (XVIIIa)$$

and

2) at least a comonomer of formula

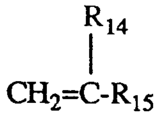

(XIXa),

wherein $R_{12}$ is a group of Formula XIIa with the mentioned meaning and $R_{13}$ is hydrogen, $C_1$-$C_{12}$alkyl, which can be disrupted by -O-, $C_3$-$C_5$alkenyl, $C_7$-$C_{11}$aralkyl, $C_5$-$C_7$ cycloalkyl or equal to $R_{12}$,
$Y_6$ and $Y_7$ independently mean -O- or -$NR_5$-, wherein $R_5$ has the above mentioned meaning,
$R_{14}$ is hydrogen or methyl,
$R_{15}$ means hydrogen $C_1$-$C_{12}$alkyl, phenyl, Cl, CN, $C_1$-$C_4$alkoxy, $C_2$-$C_5$alkanoyloxy, -$CONH_2$, -$COOR_{16}$, -$OR_{16}$ or - $CONR_{17}R_{18}$,
$R_{16}$ is hydrogen $C_1$-$C_{12}$alkyl, $C_2$-$C_4$ hydroxyalkyl or a group of Formula XII with the mentioned meaning,
$R_{17}$ is $C_1$-$C_{12}$alkyl, $C_5$-$C_7$ cycloalkyl, phenyl or a group of formula

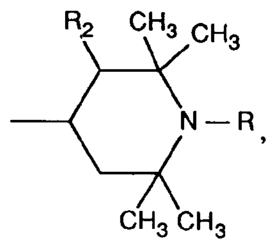

wherein R and $R_2$ have the meaning mentioned in claim 6, $R_{18}$ is hydrogen $C_1$-$C_{12}$alkyl, $C_5$-$C_7$cycloalkyl or $C_7$-$C_{11}$aralkyl or $R_{17}$ and $R_{18}$ together with the N-atom, to which they are bound, form a 5-7 membered heterocyclic ring selected from pyrrolidin, piperidin, morpholin or 4-alkylpiperazin,
or copolymers from

1) at least a maleimid of formula

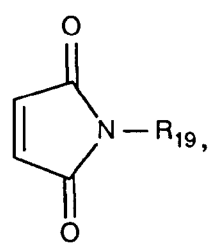

wherein $R_{19}$ is a group $Q_1$, and
2) at least a comonomer of formula

$CH_2$=CH-$R_{20}$,

wherein $R_{20}$ hydrogen or $C_1$-$C_{12}$ alkyl.

**13.** A photoreceptor according to claim 1, wherein the polymer of (iia) has a repeating unit of formula

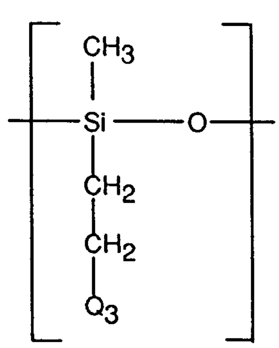

(XXa),

wherein $Q_3$ is a group of formulae

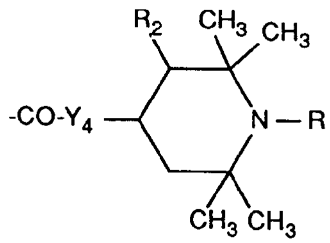 , 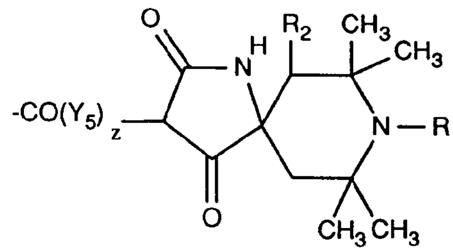 ,

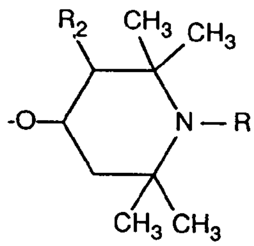 ,

wherein R and $R_2$ have the meaning mentioned in claim 6, $Y_4$ is -O- or $-NR_5-$, wherein $R_5$ has the meaning mentioned in claim 9, $Y_5$ means a group $-O-CHR_{11}-CH_2-$,
wherein $R_{11}$ hydrogen, methyl, ethyl, phenoxymethyl or phenyl and z means zero or 1, as well as compolymers of XX with a compound containing at least a polymerizable double bond, wherein at least a repeating unit XX is contained per 10 co-components.

**14.** A photoreceptor according to claim 1, wherein the polymer of (iia) is polymer obtained by condensation of a compound of Formula

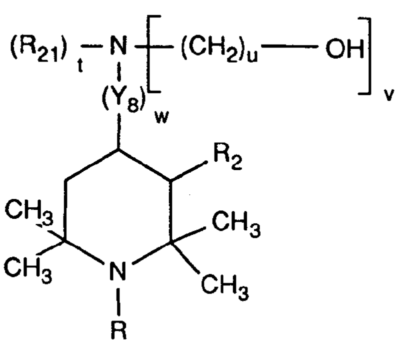

(XXIa),

wherein R and $R_2$ have the meaning mentioned in claim 6, $R_{21}$ is hydrogen, $Y_8$ means a group $-(CH_2)_u-NH-$, u is a number of 1-4, t is zero or 1, w is zero or 1 and v is 1 or 2, with the condition that if v is 2, then t means zero, with a diisocyanate of Formula

$$O=C=N-Y_9-N=C=O \qquad (XXIIa),$$

wherein $Y_9$ means a group
$-(CH_2)_a-$,

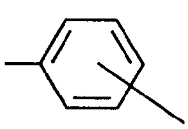 , 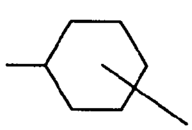 , 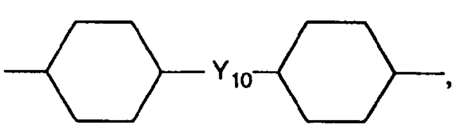 ,

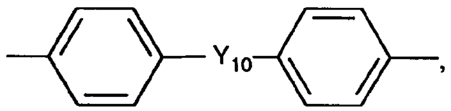

wherein $Y_{10}$ means a direct bond, $-(CH_2)_b-$, $-NR_{22}-$, -O-, -S-, $-SO_2-$, a means a number of from 1 to 10 and b means a number of from 1 to 5 and $R_{22}$ is $C_1$-$C_4$ alkyl.

**15.** A photoreceptor according to claim 1, wherein the polymer of (iia) is represented by a formula

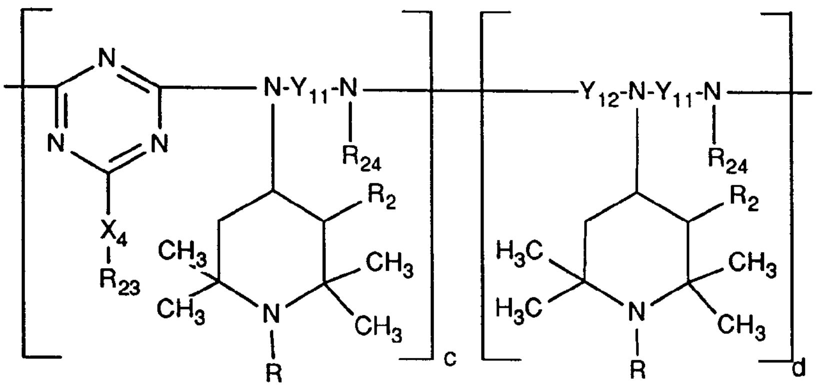

(XXIIIa),

wherein R has the meaning mentioned in claim 6, $R_{23}$ is hydrogen, $C_1$-$C_{12}$alkyl, substituted $C_2$-$C_{12}$alkyl which is substituted by -OH, $C_1$-$C_4$alkyl or $C_2$-$C_8$dialkylamino, $C_3$-$C_5$alkenyl, $C_5$-$C_7$cycloalkyl, $C_6$-$C_{18}$aryl, $C_7$-$C_{11}$aralkyl or a group

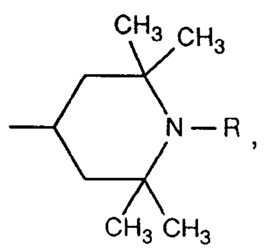

$R_{24}$ means $C_5$-$C_7$ cycloalkyl, $C_6$-$C_{18}$ aryl, $C_7$-$C_{11}$ aralkyl or a group formula

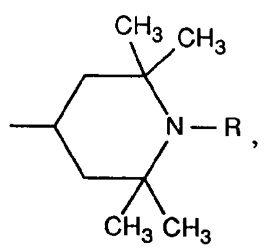

$X_4$ is -O-, -S- or $-NR_{25}-$, wherein $R_{25}$ can have the same meaning as $R_{23}$, $R_{23}X_4$- can mean, regarded as an individual substituent, a heterocyclic residue selected from the group consisting of pyrrolidin-1-yl, piperidin-1-yl, hexahydroazepin-1-yl, morpholin-4-yl or methylpiperazin-1-yl,
$Y_{11}$ means $C_2$-$C_{10}$alkylen, $C_4$-$C_{10}$alkylen which is disrupted by 1 or 2 oxygen or -NH- group, cyclohexan, phenylene, a group

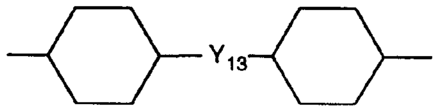 or 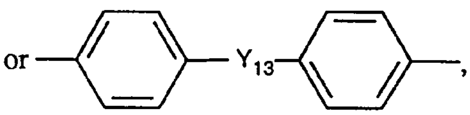 ,

wherein $Y_{13}$ is a direct bond or $-(-CH_2-)_{1-10}-$, $Y_{12}$ represents $C_2$-$C_{10}$hydroxyalkylen, $C_4$-$C_8$alkenylen or a group -CO-, -OCC-$Y_{11}$-COO, -COO-$Y_{11}$-OOC, -OCNH-$Y_{11}$-NHCO-, -HNOC-$Y_{11}$-CONH- or -OC-$Y_{11}$-CO-, wherein the ratio of the structural units c:d lies between 4:1 to 1:4.

**16.** A photoreceptor according to claim 1, wherein the polymer of (iia) has a repeating unit of formula

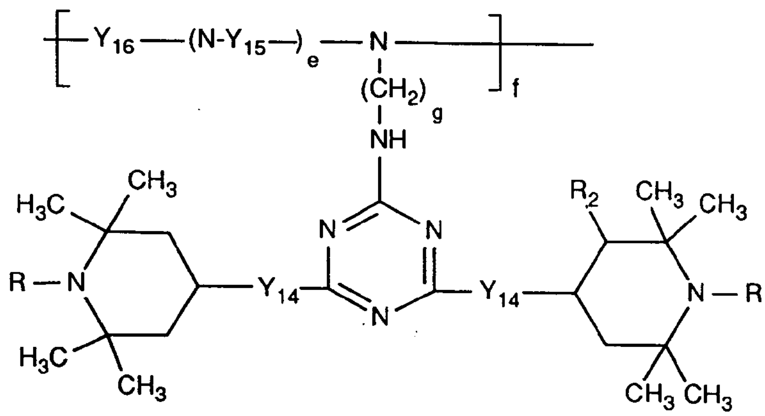 (XXIVa),

wherein R and $R_2$ have the meaning mentioned in claim 6, $Y_{14}$ is -O- or -$NR_{18}$-, wherein $R_{18}$ is $C_1$-$C_{12}$ alkyl, $C_5$-$C_7$ cycloalkyl or $C_7$-$C_{11}$ aralkyl, g can be a number of from 2 to 12, $Y_{15}$ is a group $-(-CH_2-)_g-$, in which the g is a number of from 2 to 12, the group

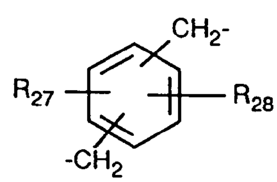 ,

in which $R_{27}$ and $R_{28}$ are independently hydrogen or methyl,

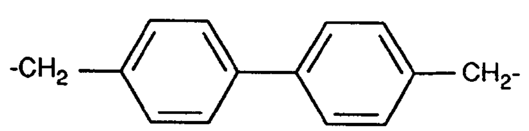 , 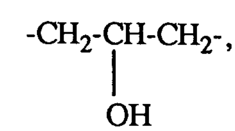

$-CH_2-CH_2(OCH_2-CH_2-)_h-$ ,
wherein h can be 1 to 3
$R_{26}$ is hydrogen, $C_1$-$C_{12}$ alkyl, a group of formula

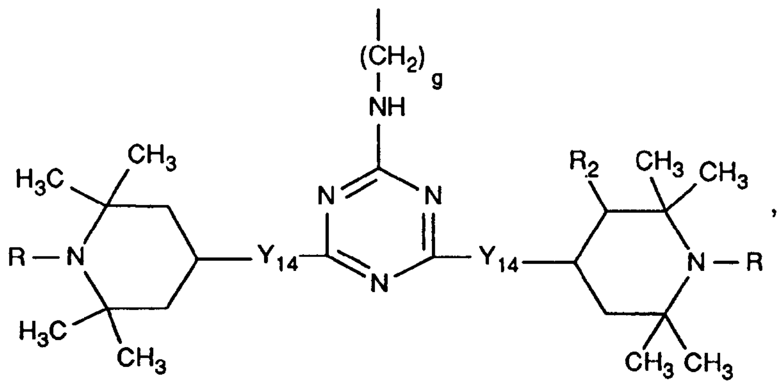

wherein R, $R_2$, $Y_{14}$ and g have the mentioned meanings, or a group of formula

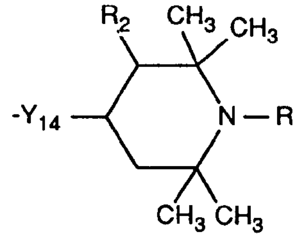

with the above mentioned meaning,
e is zero or 1,
$Y_{16}$ means, if e is zero, the meaning of $Y_{15}$ or a group

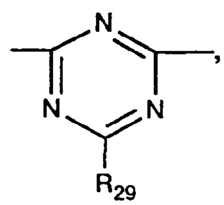

$-OC-Y_{17}-CO-$, $-OCHN-Y_{18}-NHCO-$, $-COO-Y_{19}-OOC$ or $-CH_2-Y_{20}-CO-$,
wherein $R_{29}$ means hydrogen, $C_1$-$C_{12}$alkyl, $C_5$-$C_7$cycloalkyl, $C_3$-$C_5$alkenyl, $C_7$-$C_{11}$aralkyl, unsubstituted or substituted phenyl which is substituted by $C_1$-$C_4$alkyl or a group

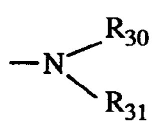

$-O-R_{30}$, $-S-R_{30}$, wherein $R_{30}$ and $R_{31}$ are independently hydrogen, $C_1$-$C_{12}$alkyl, $C_5$-$C_7$cycloalkyl, $C_7$-$C_{11}$aralkyl, unsubstituted or $C_1$-$C_4$alkyl substituted phenyl or $R_{30}$ and $R_{31}$ altogether form piperidin or morpholin with the N-atom to which they are bound,
or $R_{29}$ is a group

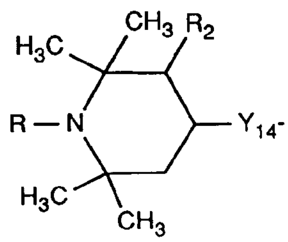

with the above mentioned meaning, $Y_{17}$ is $-(-CH_2-)_i-$ or

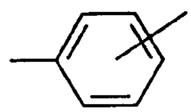,

wherein i is a number of 1 to 8,
$Y_{18}$ is $-(-CH_2-)_k-$, or a group

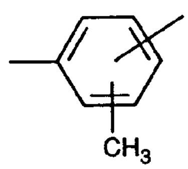 or 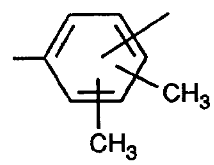,

$Y_{19}$ is $-(-CH_2-)_k-$, wherein k is a number of 2 to 8,
$Y_{20}$ is $-(-CH_2-)_1-$ or

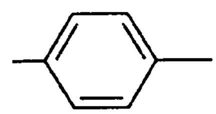,

wherein 1 is 1 or 2, and f can be a number between 2 and 2000.

**17.** A photoreceptor according to claim 1, wherein the polymer of (iia) has a repeating unit of formula

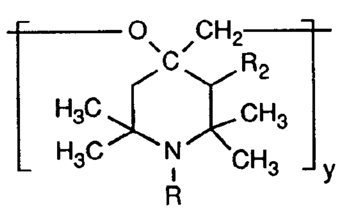

(XXVa),

wherein R and $R_2$ have the meaning given in claim 9 and y can vary between 10 and 100.

**18.** A photoreceptor according to claim 1, wherein the polymer of (iia) has a repeating unit of formula

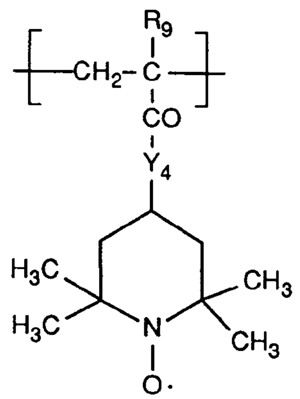

or

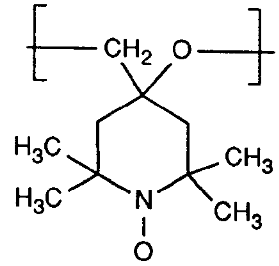

,

wherein $R_9$ means hydrogen or methyl and $Y_4$ means -O- or -NH-.

**19.** A process for stabilizing the charge generating layer of a photoreceptor with a charge transporting layer, the charge generating compound in the charge generating layer being selected from the group consisting of pyrrolopyrrol, mono- or dithio-pyrrolopyrrol, azo-pigments, quinacridone, phthalocyanine, indanthrone, flavathrone, pyranthrone, anthraquinon, perylene, dioxazine, perinone, thioindigo, isoindoline, isoindolinon and metal complexes, which comprises incorporating in the charge generating layer an stabilizing amount of (ii) of a nitroxyl or hydroxylamino compound composed of at least an unsubstituted or substituted 5-, 6- or 7-membered heterocycle containing a divalent group of Formula

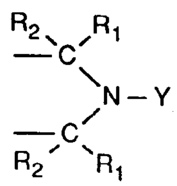 (I) or 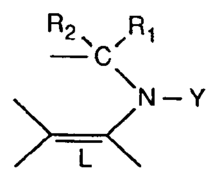 (II),

wherein $R_1$ and $R_2$ independently represent methyl, ethyl or phenyl or altogether form a 4-12 membered aliphatic ring, L represents an aromatic residue, Y means O· or OH, or an acid addition salts thereof, or (iia) of a condensation or addition polymer the repeating molecular unit of which contains at least a nitroxyl or hydroxylamino group containing residue, or is substituted by a nitroxyl or hydroxylamino group containing side group, as well as a mixture among them or a mixture with nitroxyl- or hydroxylamine-free components.

**20.** The use of (ii) of a nitroxyl or hydroxylamino compound composed of at least an unsubstituted or substituted 5-, 6- or 7-membered heterocycle containing a divalent group of Formula

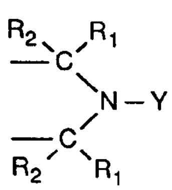 (I) or 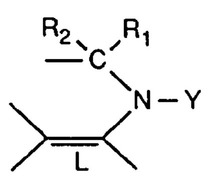 (II),

wherein $R_1$ and $R_2$ independently represent methyl, ethyl or phenyl or altogether form a 4-12 membered aliphatic ring, L represents an aromatic residue, Y means O· or OH, or an acid addition salts thereof, or (iia) of a condensation or addition polymer the repeating molecular unit of which contains at least a nitroxyl or hydroxylamino group containing residue, or is substituted by a nitroxyl or hydroxylamino group containing side group, as well as a mixture among them or a mixture with nitroxyl- or hydroxylamine-free components, for stabilizing charge generating compounds selected from the group consisting of pyrrolopyrrols, mono- or dithio-pyrrolopyrrols, azo-pigments, quinacridones, phthalocyanines, indanthrones, flavathrones, pyranthrones, anthraquinons, perylenes, dioxazines, perinones, thioindigos, isoindolines, isoindolinons and metal complexes, in a photoreceptor against degradation.